# EUROPEAN PATENT APPLICATION

(11) **EP 1 624 375 A2**
(43) Date of publication of application: **08.02.2006**
(21) Application number: 05252978.1
(22) Date of filing: 13.05.2005
(51) Int. Cl.: G06F 11/00

(54) **Apparatus, method and program to handle an abnormality in a distributed information processing system**

(30) Priority: 02.06.2004 JP 2004164089
(71) Applicant: SONY CORPORATION, Tokyo 141 (JP)
(72) Inventor: Ode, Naoki, Shinagawa-ku Tokyo 141 (JP)
(74) Representative: Horner, David Richard

(57) **Abstract**

In the information processing apparatus, the information processing method, and the program according to the embodiment of the present invention, with the execution of the application program by the first information processing means, a plurality of processing assigned to a plurality of second information processing means is set to be a processing unit proposing one function as a whole, the execution of the distributed processing for proposing a function corresponding to the processing unit in the second information processing means is controlled, first information relating to any one of abnormalities of the second information processing means executing the distributed processing is acquired, second information set depending on the processing unit and designating the operation when the abnormality is detected is acquired, and the distributed processing corresponding to the processing unit is controlled based on the second information.

## Description

The present invention relates to an information processing apparatus, an information processing method, and a program, and particularly to such information processing apparatus, information processing method, and program that are suitable in case of executing distributed processings by a plurality of processors.

In recent years, a distributed processing has been attracted attention, wherein a processing is executed in a distributed form by a plurality of processors, or computers. There are a method where processings are executed by a plurality of computers that are connected through a communications network, a method where the processings are executed by a plurality of processors provided in a single computer, and a method where the processings are executed by combining the above-mentioned two methods.

An apparatus or a processor requesting (instructing) execution of the distributed processing transmits data and program necessary for executing the distributed processing to another apparatus for executing the distributed processing. The apparatus or the processor receiving the data and program necessary for executing the distributed processing executes the requested processing, and transmits the data to which the requested processing is applied to the apparatus or the processor requesting the distributed processing.

The apparatus or the processor which requests the distributed processing receives the data transmitted from other apparatus or other processor executing the distributed processing, and performs a predetermined processing based on the received data, or records the received data.

Conventionally, there is a technology where a high-speed computer architecture is achieved by executing a distributed processing using a uniform modular structure, a common computing module, and a uniform software cell as mentioned above. (See Patent Documents 1 to 5 mentioned below)

Patent Document 1: Japanese Laid-open Patent OP2002-342165
Patent Document 2: Japanese Laid-open Patent OP2002-351850
Patent Document 3: Japanese Laid-open Patent OP2002-358289
Patent Document 4: Japanese Laid-open Patent OP2002-366533
Patent Document 5: Japanese Laid-open Patent OP2002-366534

In the Patent Documents as mentioned above, a basic processing module is a processor element (PE). The PE is equipped with a processing unit (PU), a direct memory access controller (DMAC), and a plurality of additional processing units (APU), that is, a plurality of sub processors to a main procesor.

However, in a conventional system where a plurality of sub processors are managed, when a result as one function (logic thread) is logically asked by having each of sub processors execute an individual program, all functions of the logic thread were stopped in case when one of sub processors executing the logic thread was stopped due to some reason. When the function of the logic thread is stopped, the application utilizing the logic thread had to reopen the logic thread through complex processings such as by requesting again the usage condition, reopen of the function of the logic thread, and executing the not stopped sub processor by loading the corresponding program.

It is an aim of at least preferred embodiments of the invention that even if any of sub processors executing the logic thread falls into an abnormal condition, it is possible to maintain the function operating as the logic thread to be a normal condition by stopping the function of the logic thread as necessary, or without stopping, and is able to restart the logic thread as necessary without the complex processings.

According to a first aspect the invention provides an information processing apparatus comprising first information processing means, a plurality of second information processing means, and abnormality detecting means for detecting abnormality of the second information processing means, wherein the first information processing means includes application program execution control means for controlling the execution of the application program, distributed processing control means for controlling a distributed processing for proposing one function by combining a plurality of processings assigned to a plurality of the second information processing means by the application program in which the execution is controlled by the processing of the application program execution control means, and abnormality information acquiring means for acquring first information relating to the abnormality of the second information processing means detected by the abnormality detecting means; and the distributed processing control means stores the second information designating the case where the abnormality of the second information processing means is detected by the abnormality detecting means set depending on the processing unit, and controls the distributed processing corresponding to the processing unit based on the second information when the first information is acquired by the abnormality information acquiring means.

The operations in the case where the abnormality is detected such as designated in the second information may be able to include an operation for stopping all of the distributed processings corresponding to the processing unit.

The operations in the case where the abnormality such as designated in the second information is detected may be able to include an operation, after all distributed processings corresponding to the processing unit are once stopped, for reopening the distributed processing corresponding to the processing unit so as to have the second information processing means, which does not execute the distributed processing corresponding to the processing unit, execute the distributed processing executed by the second information processing means in which the abnormality is detected by the abnormality detecting means.

The operations in the case where the abnormality such as designated in the second information is detected may be able to include an operation for stopping the distributed processing corresponding to the processing unit executed by the second information processing means in which the abnormality is detected by the abnormality detecting means, and for continuing the distributed processing executed by the second information processing means in which the distributed processing is executed and the abnormality is not occurring.

The operations in the case where the abnormality such as designated in the second information is detected may be able to include an operation, once all distributed processings corresponding to the processing unit are stopped and after the second information processing means in which the abnormaliy is detected by the abnormality detecting means becomes an operable state, for reopening the distributed processing corresponding to the processing unit so as to have the plurality of second information processing means, which execute the distributed processing before the stop of the processing, execute the distributed processing corresponding to the processing unit.

The operations in the case where the abnormality such as designated in the second information is detected may be able to include an operation, after all distributed processings corresponding to the processing unit are once stopped, for reopening the distributed processing corresponding the the processing unit so as to have the second information processing means in which the distributed processing is executed and the abnormality is not occurring execute a first distributed processing executed before the stop of the processing and a second distributed processing executed by the second information processing means in which the abnormality is detected by the abnormality detecting means in a time-sharing manner.

The first information processing means may have any one of second information processing apparatuses further include time division processing control means for controlling the time-sharing processing in the case where the first distributed processing and the second distributed processing are executed in a time-sharing manner.

According to a second aspect the invention provides an information processing method of an information processing apparatus which includes first information processing means, and a plurality of second information processing means, and includes a distributed processing start request step for requesting start of the distributed processing for proposing a function corresponding to a processing unit which proposes one function by combining a plurality of processings assigned to a plurality of the second information processing means by the execution of the application program by the first information processing means; an abnormality detection step for detecting abnormality of the second information processing means executing the distributed processing; an abnormality information acquiring step for acquiring first information relating to the abnormality of the second information processing means detected by the processing of the abnormality detection step; an abnormal operation information acquiring step for acquiring second information set depending on the processing unit and designating the operation in the case where abnormality is detected when the first information is acquired by the processing of the abnormality information acquiring step; and a distributed processing control step for controlling the distributed processing corresponding to the processing unit based on the second information acquired by the processing of the abnormal operation information acquiring step.

According to a third aspect the invention provides a program comprising a distributed processing start request step for requesting start of the distributed processing for proposing a function corresponding to a processing unit which proposes one function by combining a plurality of processings assigned to a plurality of the second information processing means by the execution of the application program by the first information processing means; an abnormality detection step for detecting abnormality of the second information processing means executing the distributed processing; an abnormality information acquiring step for acquiring first information relating to the abnormality of any one of the second information processing means executing the distributed processing; an abnormal operation information acquiring step for acquiring second information set depending on the processing unit and designating the operation in the case where abnormality is detected when the first information is acquired by the processing of the abnormality information acquiring step; and a distributed processing control step for controlling the distributed processing corresponding to the processing unit based on the second information acquired by the processing of the abnormal operation information acquiring step.

In the information processing apparatus, the information processing method, and the program according to at least preferred embodiments of the present invention, with the execution of the application program by the first information processing means, a plurality of processing assigned to a plurality of second information processing means is set to be a processing unit proposing one function as a whole, the execution of the distributed processing for proposing a function corresponding to the processing unit in the second information processing means is controlled, first information relating to any one of abnormalities of the second information processing means executing the distributed processing is acquired, second information set depending on the processing unit and designating the operation when the abnormality is detected is acquired, and the distributed processing corresponding to the processing unit is controlled based on the second information.

According to one preferred embodiment of the present invention, it is able to execute a distributed processing. Particularly, it is able to keep the function operating as the logic thread to be a normal state by stopping the function of the logic thread as necessary or without stopping, and is able to reopen the logic thread as necessary without complex processing.

Hereinafter, embodiments of the present invention are described, and a corresponding relation between the invention described in the present specification and the embodiment of the present invention is exemplified as follows. This description is to confirm that the embodiment for supporting the invention described in this present specification is described in the present specification. Accordingly, even if there is an embodiment which is described among the embodiments, but not described here as one corresponding to the invention, this does not mean that the embodiment does not correspond to the invention. On the contrary, even if the embodiment is described here as one one corresponding to the invention, this does not mean that the embodiment does not correspond to an invention other than the invention.

Further, this description does not mean all of the invention described in the present specification. In other words, this description is the invention described in the present specification, and does not deny the existence of the invention not claimed in this application, that is, the existence of the invention appeared and added by divisional application and amendment in the future.

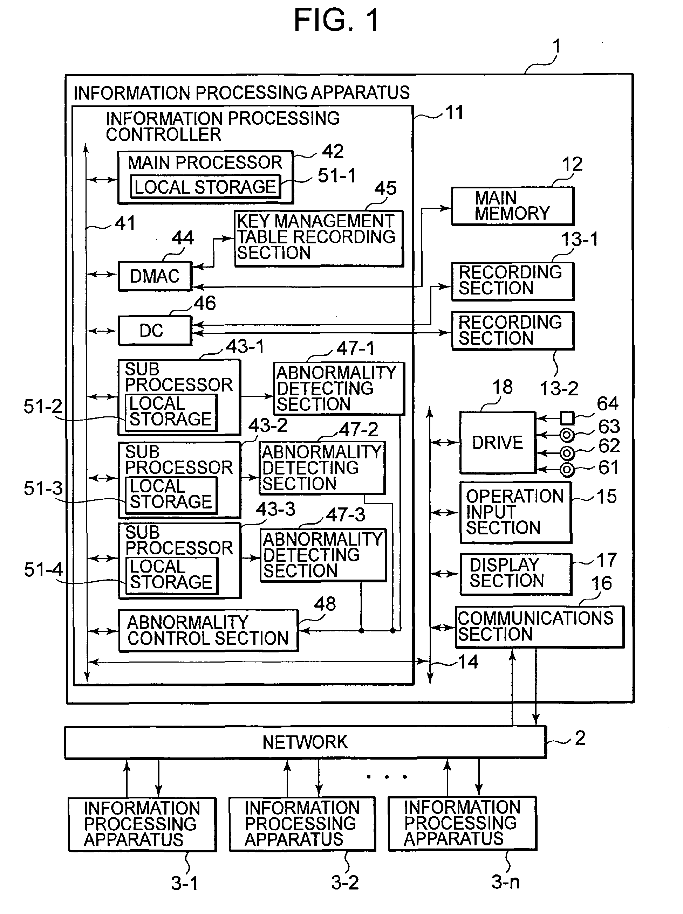

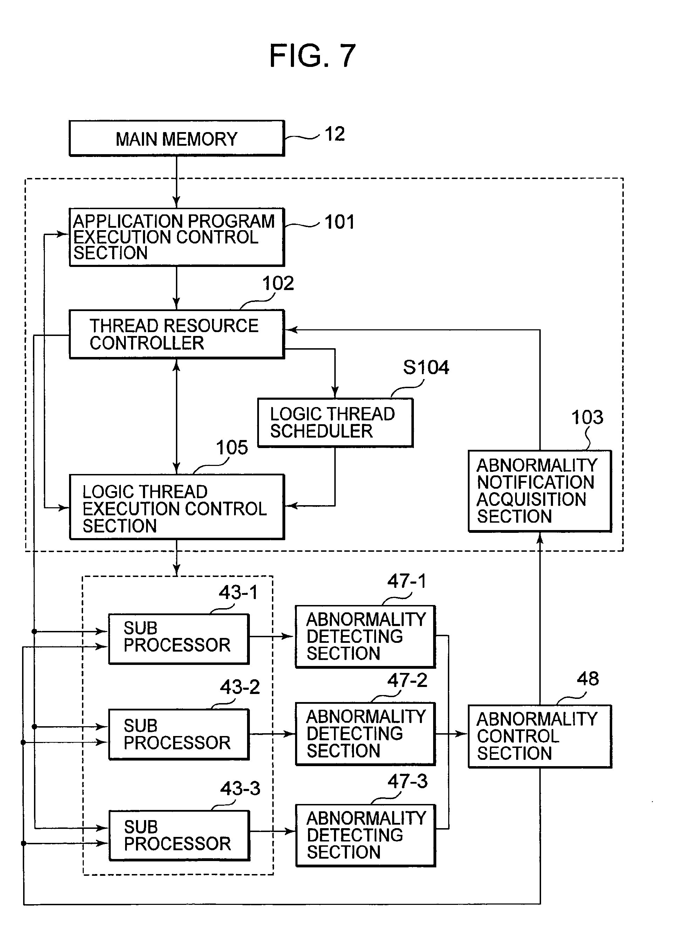

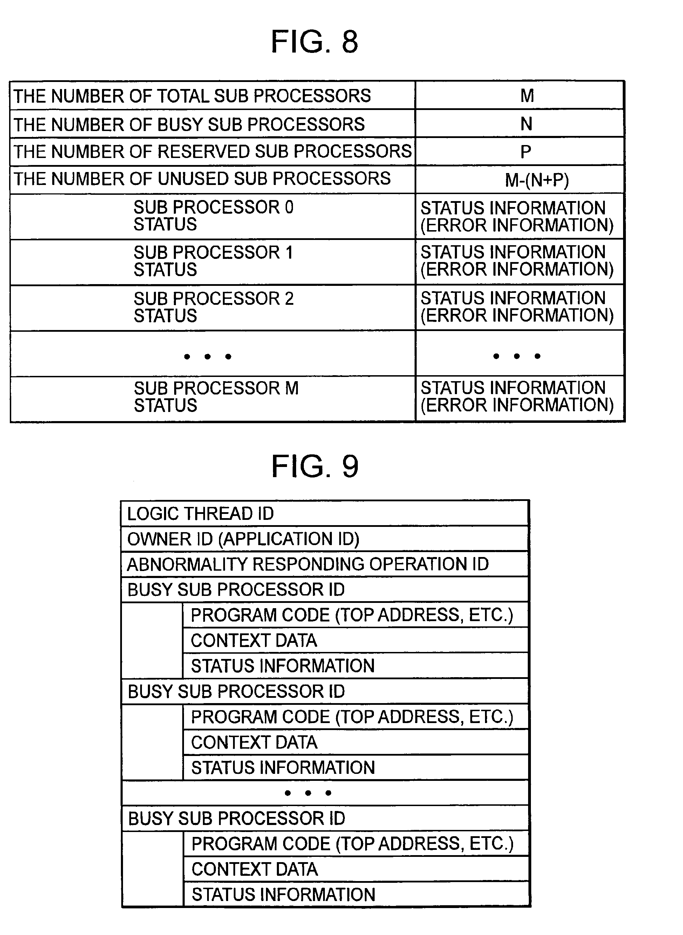

The information processing apparatus (the information processing apparatus 1 in FIG. 1, for example) described in one embodiment of the present invention includes first information processing means (the main processor 42 in FIG. 1, for example), a plurality of second information processing means (the sub processors 43-1 to 43-3 in FIG. 1, for example), and abnormality detecting means (the abnormality detecting sections 47-1 to 47-3 in FIG. 1, for example) for detecting abnormality of the second information processing means, wherein the first information processing means includes; application program execution control means (the application program execution control section 101 in FIG. 7, for example) for controlling the execution of the application program; distributed processing control means (the thread resource controller 102 in FIG. 7, for example) for controlling the distributed processing (the logic thread, for example) for proposing one function by combining a plurality of processings assigned to a plurality of the second information processing means by the application program in which the execution is controlled by the processing of the application program execution control means; and abnormality information acquiring means (the abnormality notification acquiring section 103 in FIG. 7, for example) for acquiring first information relating to the abnormality of the second information processing means detected by the abnormality detecting means, and the distributed processing control means stores the second information (the abnormality responding operation ID in FIG. 9, for example) designating the case where the abnormality of the second information processing means is detected by the abnormality detecting means set depending on the processing unit, and controls the distributed processing corresponding to the processing unit based on the second information when the first information is acquired by the abnormality information acquiring means.

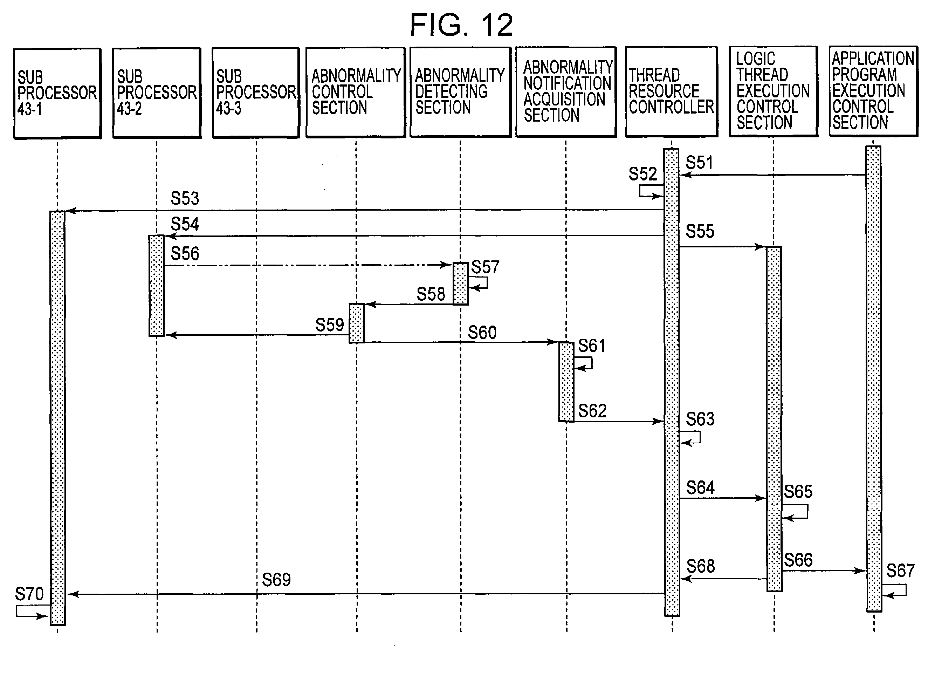

Among operations in the case where the abnormality is detected such as designated in the second information may include an operation (the operation described using FIG. 12, for example) for stopping all of the distributed processings corresponding to the processing unit.

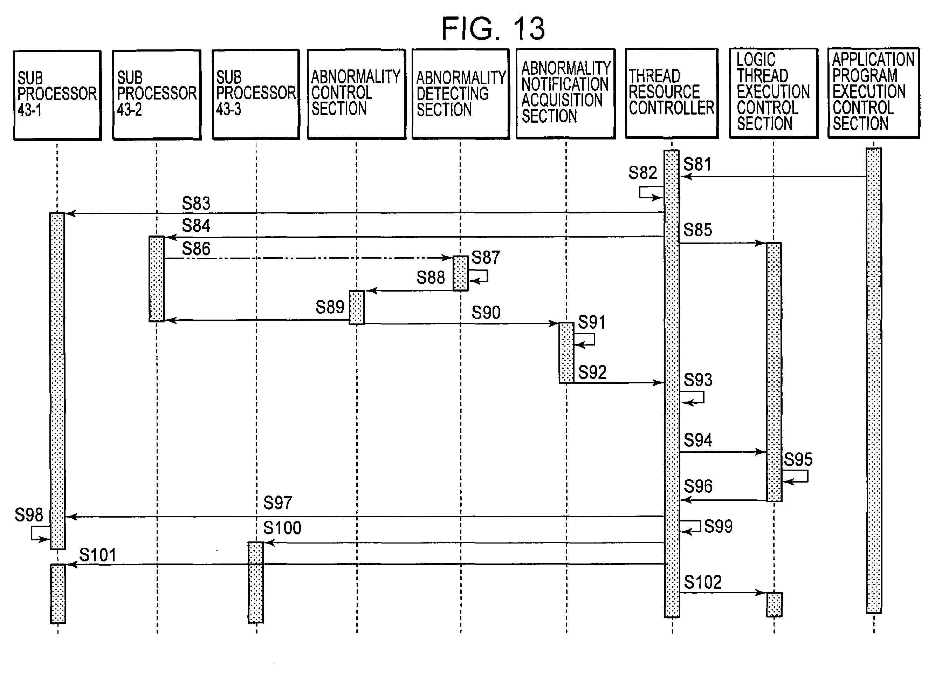

The operations in the case where the abnormality such as designated in the second information is detected may be able to include an operation, after all distributed processings corresponding to the processing unit are once stopped, for reopening the distributed processing corresponding to the processing unit so as to have the second information processing means, which does not execute the distributed processing corresponding to the processing unit, execute the distributed processing executed by the second information processing means (the sub processor 43-2 in FIG. 13, for example) in which the abnormality is detected by the abnormality detecting means.

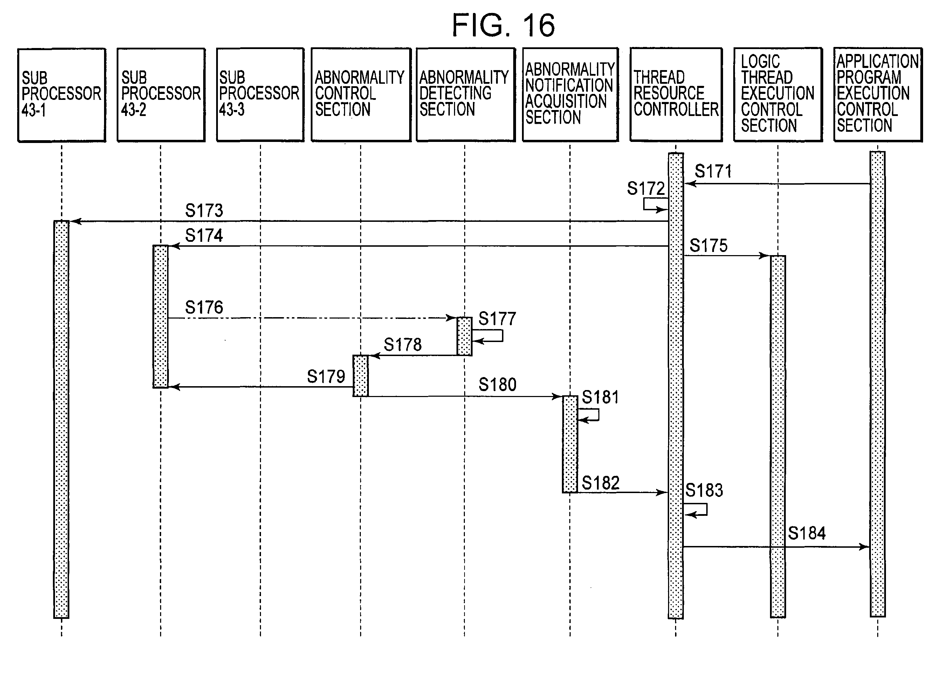

The operations in the case where the abnormality such as designated in the second information is detected may be able to include an operation (the operation described using FIG. 16, for example) for stopping the distributed processing corresponding to the processing unit executed by the second information processing means (the sub processor 43-2 in FIG. 16, for example) in which the abnormality is detected by the abnormality detecting means, and for continuing the distributed processing executed by the second information processing means (the sub processor 43-1 in FIG. 16, for example) in which the distributed processing is executed and the abnormality is not occurring.

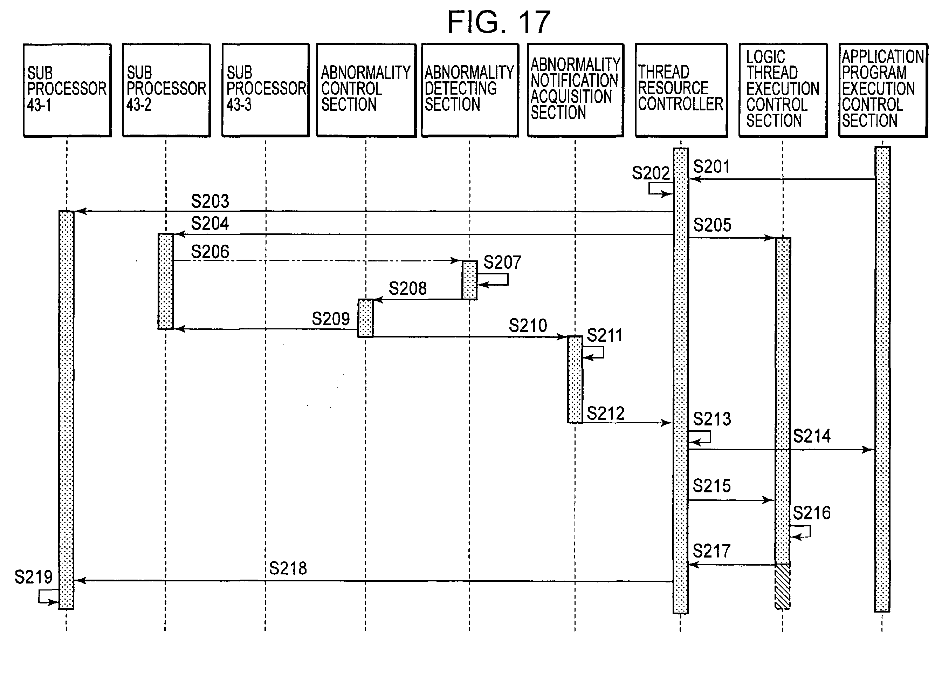

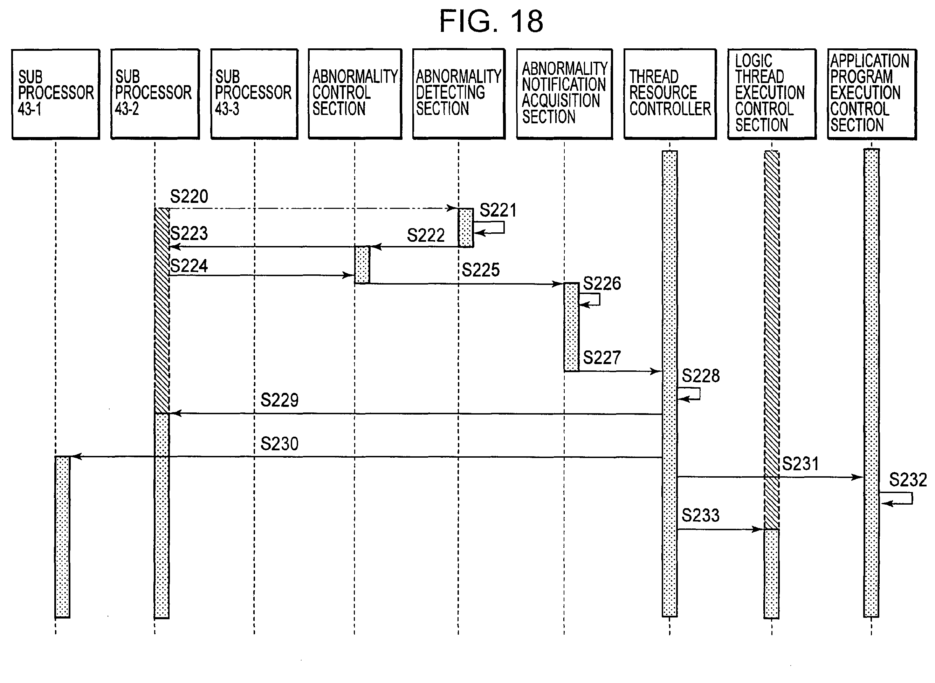

The operations in the case where the abnormality such as designated in the second information is detected may be able to include an operation (the operation described with reference to FIG. 17 and FIG. 18, for example), once all distributed processings corresponding to the processing unit are stopped and after the second information processing means (the sub processor 43-2 in FIG. 17 and FIG. 18, for example) in which the abnormaliy is detected by the abnormality detecting means becomes an operable state, for reopening the distributed processing corresponding to the processing unit so as to have the plurality of second information processing means (the sub processors 43-1 and 43-2 in FIG. 17 and FIG. 18, for example) which execute the distributed processing before the stop of the processing execute the distributed processing corresponding to the processing unit.

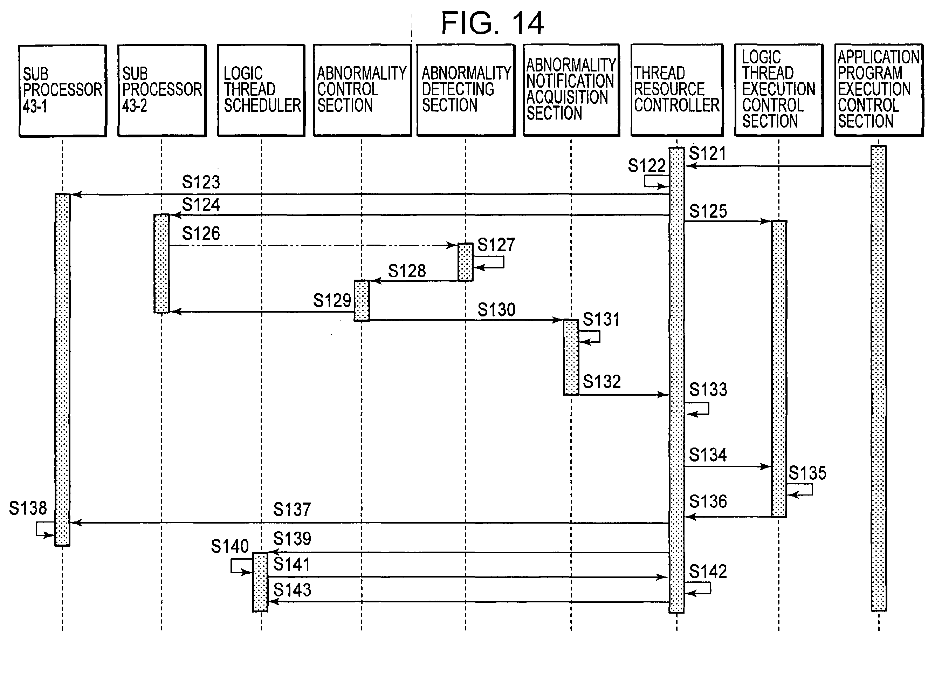

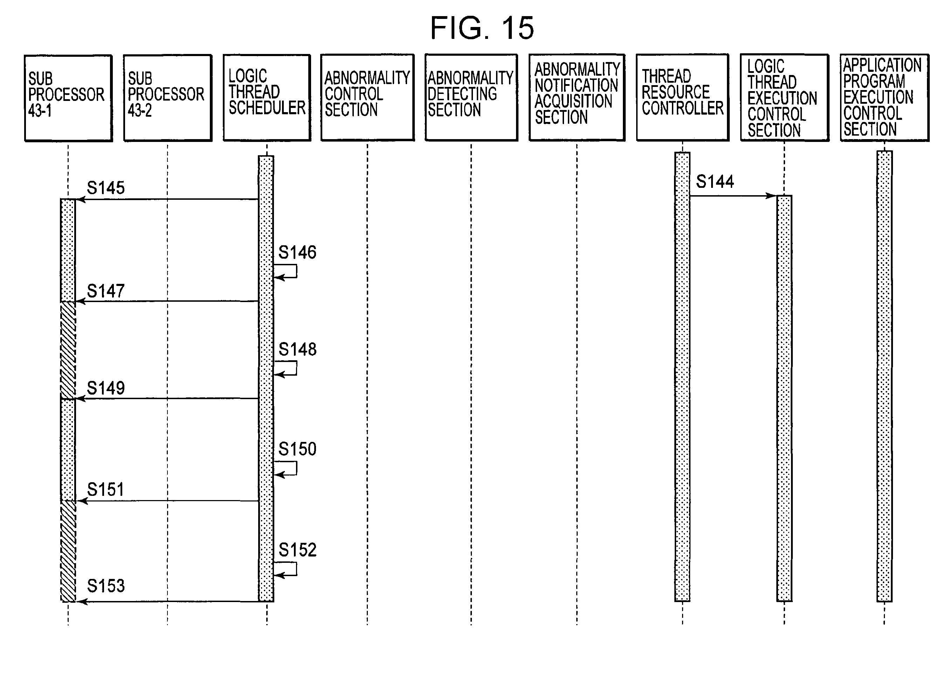

The operations in the case where the abnormality such as designated in the second information is detected may be able to include an operation (the operation described with reference to FIG. 14 and FIG. 15, for example), after all distributed processings corresponding to the processing unit are once stopped, for reopening the distributed processing corresponding the the processing unit so as to have the second information processing means (the sub processor 43-1 in FIG. 14 and FIG. 15, for example) in which the distributed processing is executed and the abnormality is not occurring execute a first distributed processing executed before the stop of the processing and a second distributed processing executed by the second information processing means (the sub processor 43-2 in FIG. 14 and FIG. 15, for example) in which the abnormality is detected by the abnormality detecting means in a time-sharing manner.

The first information processing means may have any one of second information processing apparatuses further include time division processing control means (the logic thread scheduler 104 in FIG. 7, for example) for controlling the time-sharing processing in the case where the first distributed processing and the second distributed processing are executed in a time-sharing manner.

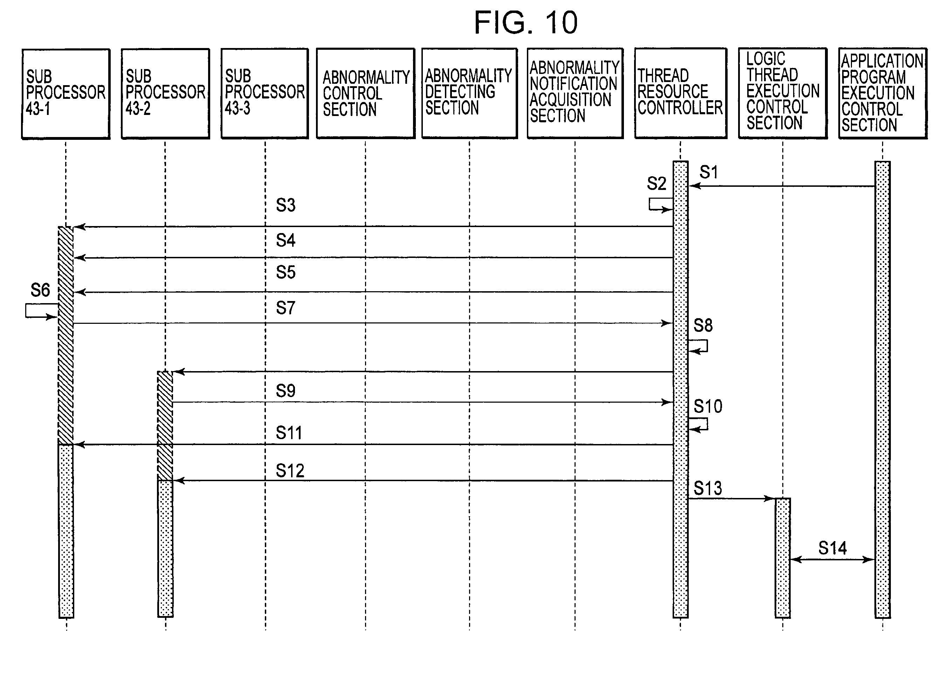

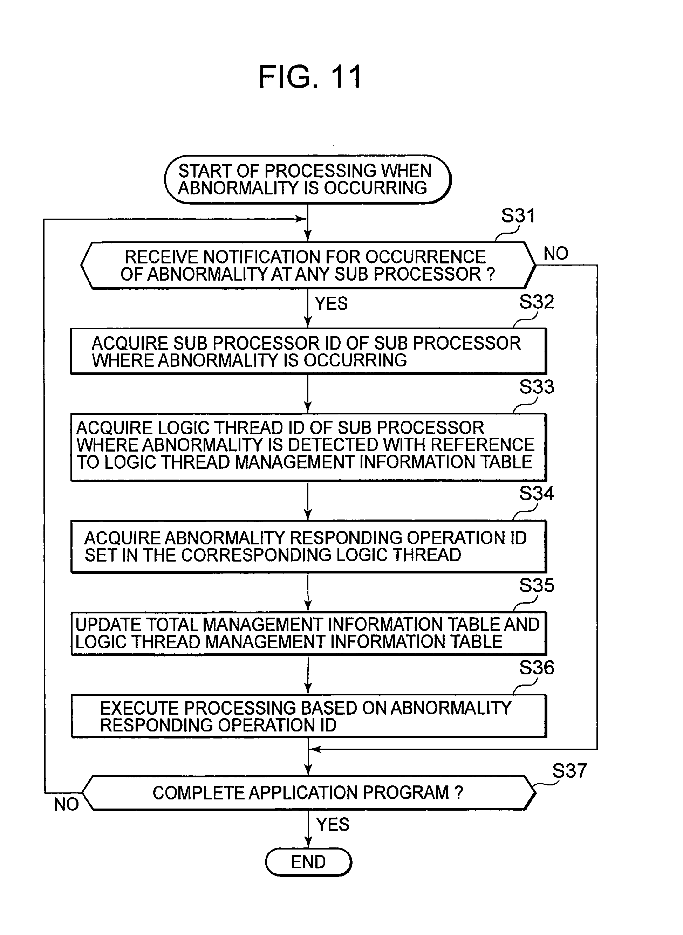

The information processing method of one example embodiment of the present invention is an information processing method of an information processing apparatus (the information processing apparatus 1 in FIG. 1, for example) which includes first information processing means (the main processor 42 in FIG. 1, for example), and a plurality of second information processing means (the sub processors 43-1 to 43-3 in FIG. 1, for example), and includes a distributed processing start request step (step S1 in FIG. 10, step S51 in FIG. 12, step S81 in FIG. 13, step S121 in FIG. 14, step S171 in FIG. 16, and step S201 in FIG. 17, for example) for requesting start of the distributed processing for proposing a function corresponding to a processing unit (the logic thread, for example) which proposes one function by combining a plurality of processings assigned to a plurality of the second information processing means by the execution of the application program by the first information processing means; an abnormality detection step (step S57 in FIG. 12, step S87 in FIG. 13, step S127 in FIG. 14, step S177 in FIG. 16, and step S207 in FIG. 17, for example) for detecting abnormality of the second information processing means executing the distributed processing; an abnormality information acquiring step (step S31 in FIG. 11, step S60 in FIG. 12, step S90 in FIG. 13, step S130 in FIG. 14, step S180 in FIG. 16, and step S120 in FIG. 17, for example) for acquiring first information relating to the abnormality of the second information processing means detected by the processing of the abnormality detection step; an abnormal operation information acquiring step (step S34 in FIG. 11, for example) for acquiring second information (the abnormality responding operation ID in FIG. 9, for example) set depending on the processing unit and designating the operation in the case where abnormality is detected when the first information is acquired by the processing of the abnormallity information acquiring step; and a distributed processing control step (step S36 in FIG. 11, for example) for controlling the distributed processing corresponding to the processing unit based on the second information acquired by the processing of the abnormal operation information acquiring step.

The program of one embodiment is a program executable by a computer which controls a distributed processing in a first information processing means (the main processor 42 in FIG. 1, for example), and a plurality of second information processing means (the sub processors 43-1 to 43-3 in FIG. 1, for example), and have the computer execute the processing which includes; a distributed processing start request step (step S1 in FIG. 10, step S51 in FIG. 12, step S81 in FIG. 13, step S121 in FIG. 14, step S171 in FIG. 16, and step S201 in FIG. 17, for example) for requesting start of the distributed processing for proposing a function corresponding to a processing unit (the logic thread, for example) which proposes one function by combining a plurality of processings assigned to a plurality of the second information processing means by the execution of the application program by the first information processing means; an abnormality information acquiring step (step S31 in FIG. 11, step 60 in FIG. 12, step S90 in FIG. 13, step S130 in FIG. 14, step S 180 in FIG. 16, and step S210 in FIG. 17, for example) for acquiring first information relating to the abnormality of any one of the second information processing means executing the distributed processing; an abnormal operation information acquiring step (step S34 in FIG. 11, for example) for acquiring second information (the abnormality responding operation ID in FIG. 9, for example) set depending on the processing unit and designating the operation in the case where abnormality is detected when the first information is acquired by the processing of the abnormality information acquiring step; and a distributed processing control step (step S36 in FIG. 11, for example) for controlling the distributed processing corresponding to the processing unit based on the second information acquired by the processing of the abnormal operation information acquiring step.
Further particular and preferred aspects of the present invention are set out in the accompanying independent and dependent claims. Features of the dependent claims may be combined with features of the independent claims as appropriate, and in combinations other than those explicitly set out in the claims.
The present invention will be described further, by way of example only, with reference to preferred embodiments thereof as illustrated in the accompanying drawings, in which:
FIG. 1 is a chart for showing one embodiment of communications system to which the present invention is applied;
FIG. 2 is a chart for describing a main memory;
FIG. 3 is a chart for describing a local storage of a sub processor;
FIG. 4 is a chart for describing a key management table;
FIG. 5 is a chart for showing a configuration example of a software cell;
FIG. 6 is a chart for showing a structure of data area of a software cell in case when DMA command is a status return command;
FIG. 7 is a block diagram showing a configuration of function in the information processing apparatus;
FIG. 8 is a chart for describing a whole management information table;
FIG. 9 is a chart for describing a logic thread management information table;
FIG. 10 is an arrowchart for describing an execution of a logic thread processing;
FIG. 11 is a chart for describing processing when abnormality is occurring;
FIG. 12 is an arrowchart for describing processing for "STOP" when abnormality is occurring;
FIG. 13 is an arrowchart for describing processing in "continue after securing resource" when abnormality is occurring;
FIG. 14 is an arrowchart for describing processing in "continue time-sharing operation" when abnormality is occurring;
FIG. 15 is an arrowchart for describing processing in "continue time-sharing operation" when abnormality is occurring;
FIG. 16 is an arrowchart for describing processing in "forcibly-continue" when abnormality is occurring;
FIG. 17 is an arrowchart for describing processing in "wait until normal recovery" when abnormality is occurring; and
FIG. 18 is an arrowchart for describing processing in "wait until normal recovery" when abnormality is occurring.

Hereinafter, one example embodiment of the present invention is described with reference to drawings.

FIG. 1 is a chart for showing one example embodiment of communications system to which the present technique is applied. In this communications system, an information processing apparatus 1 and information processing apparatuses 3-1 to 3-n are interconnected through a network 2 corresponding to a wide area network such as, for example, a home network, LAN (Local Area Network), WAN (Wide Area Network), or Internet.

The information processing apparatus 1 generates a software cell including data and program necessary for executing the requested processing, when being instructed the execution of the distributed processing by a plurality of information processing apparatuses, and transmits the generated software cell to any one of the information processing apparatuses 3-1 to 3-n through the network 2.

Each of the information processing apparatuses 3-1 to 3-n receives the software cell transmitted from the information processing apparatus 1, and executes the requested processing based on the received software cell. After execution of the requested processing, each of the information processing apparatuses 3-1 to 3-n transmits data obtained as the result of the requested processing to the information processing apparatus 1 through the network 2. Hereinafter, the information processing apparatuses 3-1 to 3-n are referred to simply as an information processing apparatus 3, when they are not necessary to identify each of them.

The information processing apparatus 1 receives data transmitted from any one of the information processing apparatuses 3-1 to 3-n, and executes a predetermined processing based on the received data, or records the received data.

The information processing apparatus 1 is configured to include an information processing controller 11, a main memory 12, a recording section 13-1, a recording section 13-2, a bus 14, an operation input section 15, a communications section 16, a display section 17, and a drive 18.

The information processing controller 11 executes various programs stored in the main memory 12, and controls the whole information processing apparatus 1. The information processing controller 11 generates a software cell, and supplies the generated software cell to the communications section 16 through the bus 14. The information processing controller 11 supplies data supplied from the communications section 16 to the recording section 13-1, or the recording section 13-2. The information processing controller 11 acquires a specified data from the main memory 12, the recording section 13-1, or the recording section 13-2 based on a user command entered fron the operation input section 15, and supplies the acquired data to the communications section 16 through the bus 14.

Further, a device ID capable of uniquely specifying the information processing apparatus 1 through the whole network 2 is allocated to the information processing controller 11.

The information processing controller 11 is equipped with a bus 41, a main processor 42, sub processors 43-1 to 43-3, a DMAC (Direct Memory Access Controller) 44, a key management table recording section 45, and a DC (Disk Controller) 46.

The main processor 42, the sub processors 43-1 to 43-3, the DMAC 44, the key management table recording section 45, and the DC 46 are interconnected through the bus 41. Further, a main processor ID for specifying the main processor 42 is allocated to the main processor 42 as an identifier. In the same manner, each sub processor ID for specifying each of the sub processors 43-1 to 43-3 is allocated to each of the sub processors 43-1 to 43-3 as each identifier.

The main processor 42 generates the software cell when executing the distributed processing by the information processing apparatuses 3-1 to 3-n connected through the network 2, and supplies thus generated software cell to the bus 41 and the communications section 16 through the bus 14. Further, the main processor 42 is able to be configured to execute programs other than programs for management. In this case, the main processor 42 functions as a sub processor.

The main processor 42 is able to ask the sub processors 43-1 to 43-3 the result as one function (logic thread) logically to execute independent program by each sub processor. That is, the main processor 42 performs a schedule management of in execution of the program by the sub processors 43-1 to 43-3 and a total management of the information processing controller 11 (the information processing apparatus 1).

The main processor 42 is equipped with a local storage 51-1, and temporarily stores the data and program loaded from the main memory 12 in the local storage 51-1. The main processor 42 reads in the data and program from the local storage 51-1, and executes various processings based on the read out data and program.

The sub processors 43-1 to 43-3 execute the program parallely and independently based on the control by the main processor 42 and process the data. In addition, it is possible, if necessary, to configure so that the program executed by the main processor 42 operates in association with each program which is executed by each of the sub processors 43-1 to 43-3.

Each of the sub processors 43-1 to 43-3 is equipped with each of the local storages 51-2 to 51-4. Further, each of the sub processors 43-1 to 43-3 temporarily stores the data and program, if necessary, in each of the local storages 51-2 to 51-4. Each of the sub processors 43-1 to 43-3 reads out the data and program from each of the local storages 51-2 to 51-4, and executes various processings based on the read out data and program.

Abnormality detecting sections 47-1 to 47-3 are connected to the sub processors 43-1 to 43-3. These abnormality detecting sections 47-1 to 47-3 detect abnormality of the corresponding sub processors 43-1 to 43-3, and notify to an abnormality control section 48.

Hereinafter, when it is not necessary to identify each of the sub processors 43-1 to 43-3 independently, it is simply referred to as a sub processor 43, and also, when it is not necessary to identify each of the abnormality detecting sections 47-1 to 47-3 independently, it is simply referred to as an abnormality detecting section 47. In the same way, when it is not necessary to identify each of the local storages 51-1 to 51-4 independently, it is simply referred to as a local storage 51.

In FIG. 1, the case where the sub processor 43 is provided with 3, such as sub processors 43-1 to 43-3 is described, but the sub processor 43 may be provided with any number other than 3, and further, of course, the abnormality detecting section 47 and the local storage 51 may be provided with the number corresponding to the number of the sub processors 43.

DMAC 44 manages the access to the program and data stored in the main memory 12 from the main processor 42 and the sub processor 43 based on the main processor key, the sub processor key, and the access key recorded in the key management table recording section 45.

The key management table recording section 45 records the main processor key, the sub processor key, and the access key. In this case, details of the main processor key, the sub processor key, and the access key are described later.

The DC 46 manages access from the main processor 42 and the sub processor 43 to the recording sections 13-1 and 13-2.

When receiving the notification that abnormality is occurring in any one of sub processors 43-1 to 43-3 from any one of abnormality detecting sections 47-1 to 47-3, the abnormality control section 48 stops the operation of the sub processor 43 in which the abnormality is occurring, and supplies the information relating to the sub processor 43 in which the abnormality is occurring to the main processor 42 through the bus 41.

In this case, the command for stopping the operation of the sub processor 43 when the abnormality control section 48 detects the abnormality and stops the operation of the sub processor 43 may be supplied directly to the sub processor 43, but not through the bus 41.

The main memory 12 is configured with a RAM, for example. The main memory 12 temporarily stores various programs and data executed by the main processor 42 and the sub processor 43.

The recording sections 13-1 and 13-2 are configured with a hard disk, for example. The recording sections 13-1 and 13-2 may record various program and data executed by the main processor 42 and the sub processor 43. Further, the recording sections 13-1 and 13-2 records data supplied from the information processing controller 11. Herein after, when it is not necessary to identify each of the recording sections 13-1 and 13-2 independently, it is simply referred to as a recording section 13.

An operation input section 15, a communications section 16, a display section 17, and a drive 18 are connected to the information processing controller 11 through the bus 14. The operation input section 15 is configured with a key, a button, a touch pad, a mouse, and the like, receives an operation input by a user, and supplies information corresponding to the operation input to the information processing controller 11 through the bus 14.

The communications section 16 transmits the software cell supplied from the information processing controller 11 to the information processing apparatuses 3-1 to 3-n through the network 2. Further, the communications section 16 supplies the data transmitted from the information processing apparatuses 3-1 to 3-n to the information processing controller 11 through the bus 14.

The display section 17 is configured with a CRT (Cathode Ray Tube) or LCD (Liquid Crystal Display), for example, and displays information (including data generated by the execution of the program, information such as notification to a user necessary for executing the application program, for example) generated with the processing by the information processing controller 11 and supplied through the bus 14.

When a magnetic disk 61, an optical disk 62, a magneto-optical disk 63, a semiconductor memory 64, or the like are installed, the drive 18 drives them, and acquires programs and data stored therein. Thus acquired programs and data are transferred, if necessary, to the information processing controller 11 through the bus 14, and are recorded in the recording section 13 by the information processing controller 11.

In this case, the information processing apparatuses 3-1 to 3-n are configured like the information processing apparatus 1, so that its description is neglected. The information processing apparatuses 3-1 to 3-n are not limited to the above-mentioned configuration, and it is possible to add or delete functions, if necessary, and is possible to have a configuration depending on the function.

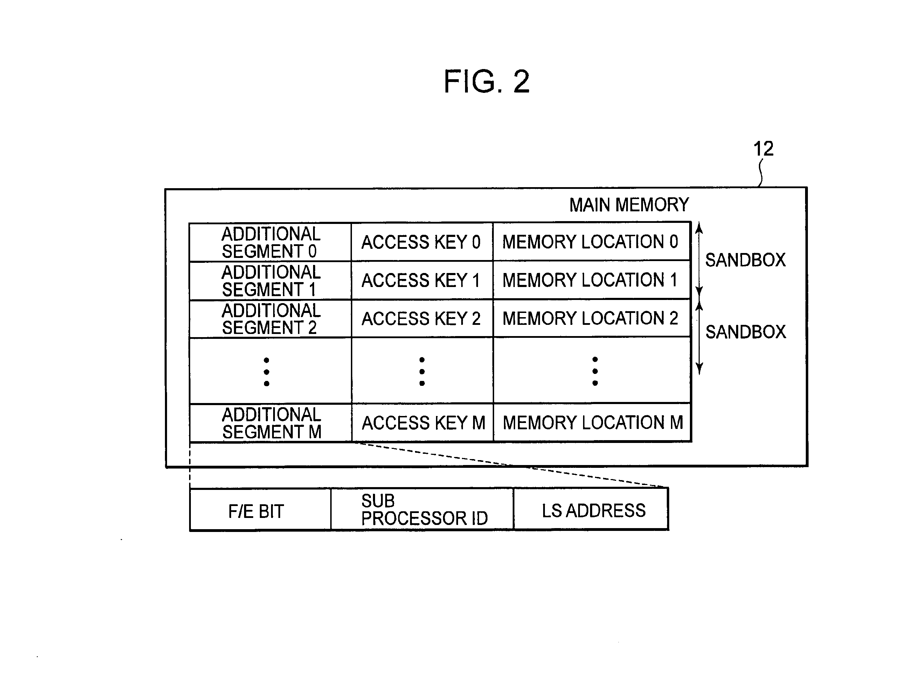

Next, the processing where the sub processor 43 tries to access to the main memory 12 in case of accessing is described with reference to FIG. 2 to FIG. 4.

As shown in FIG. 2, memory locations capable of specifying a plurality of addresses are arranged in the main memory 12. An additional segment for storing information designating status of data is allocated to each of the memory locations. The additional segment includes a F/E bit, a sub processor ID, and a LS address (Local Storage address). The access key (described later) is allocated to each of the memory locations.

The F/E bit of "0" is data in processing of reading out by the sub processor 43, or invalid data which is not the latest data because of vacant condition, and designates unreadable from the memory location. Further, the F/E bit of "0" designates that data is writable to the memory location, and when the data is written, the F/ E bit is set to be "1".

The F/E bit of "1" designates that the data at the memory location is not read out by the sub processor 43 and is an updated data which is not processed yet. The data at the memory location where the F/E bit is "1" is able to be read out, and the F/ E bit is set to be "0" after read out by the sub processor 43. In addition, the F/E bit of "1" designates that the memory location is prohibited the data writing.

It is possible to set a read out reservation with regard to a memory location in a state where the F/E bit is "0" (not readable/writable). When the read out reservation is performed to the memory location where the F/E bit is "0", the sub processor 43 writes a sub processor ID and a LS address of the sub processor 43 to an additional segment of the memory location to which the read out reservation is performed as a read out reservation information. The data is written in the read out reserved memory location by the sub processor 43 which writes the data, and is read out to the local storage 51 specified by the sub processor ID and the LS address written in the additional segment in advance as the read out reservation information when the F/E bit is set to be "1" (readable/not writable).

In a case where it is necessary to process the data in multistage form by the plurality of sub processors 43, by controlling read/write of the data of each memory location as mentioned above, the other sub processor 43 for executing the processing of the later stage is able to read out data after pre-processing immediately after the sub processor 43 executing the processing of previous stage writes in the processed data to a predetermined address of the main memory 12.

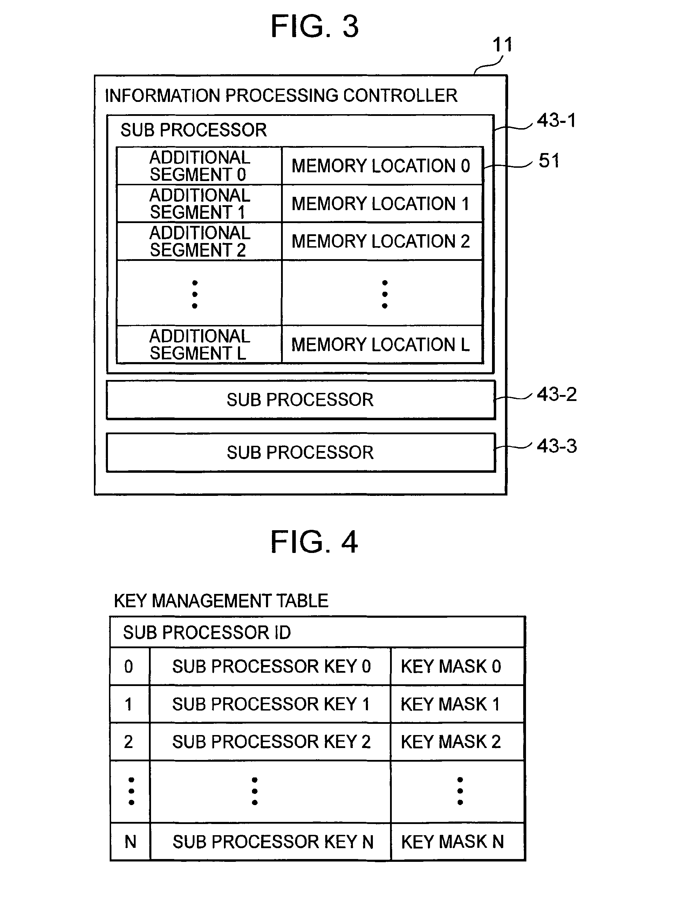

Further, as shown in FIG. 3, a local storage 51 of the sub processor 43 is configured with a memory location capable of designating a plurality of addresses. In the same manner, an additional segment is allocated to each memory location. The additional segment includes a busy bit.

When the sub processor 43 reads out data stored in the main memory 12 to a memory location of the local storage 51 in the sub processor 43, the sub processor 43 reserves by setting the corresponding busy bit to "1". It is not able to store another data at the memory location where the busy bit is "1". When the data is read out to the memory location of the local storage 51, the busy bit is set to "0", and it becomes possible to store another data.

As shown in FIG. 2, the main memory 12 connected to each information processing controller 11 further includes a plurality of sandboxes. The sandboxes define areas within the main memory 12, and each sandbox is allocated to each sub processor 43 and can be used exclusively by the corresponding sub processor 43. That is, each of the sub processors 43 can use a sandbox allocated thereto but may not access data beyond this area.

The main memory 12 is formed from a plurality of memory locations, and a sandbox is a set of these memory locations.

Further, in order to implement exclusive control of the main memory 12, such a key management table as shown in FIG. 4 is used. The key management table is stored in a key management table recording section 45, and is associated with the DMAC 44. Each entry within the key management table includes a sub processor ID, a sub processor key, and a key mask.

When the sub processor 43 accesses to the main memory 12, the sub processor 43 outputs a readout or writing command to the DMAC 44. This command includes its sub processor ID for specifying the sub processor 43 and an address in the main memory 12, which is a destination of the access.

Before the DMAC 44 executes this command supplied from the sub processor 43, the DMAC 44 refers to the key management table to search the sub processor key of the sub processor 43, which is a source of the access request. Next, the DMAC 44 compares the searched sub processor key of the source of the access request with an access key allocated to the memory location in the main memory 12, which is the destination of the access request, and executes the above-mentioned command supplied from the sub processor 43 only when the two keys coincide with each other.

A key mask on the key management table shown in FIG. 4 can set, when an arbitrary bit thereof is set to "1", a corresponding bit of the sub processor key associated with the key mask to "0" or "1"

It is assumed that, e.g., the sub processor key is "1010". Usually, with this sub processor key, only access to a sandbox having an access key of "1010" is enabled. However, where the key mask associated with this sub processor key is set to "0001", only a digit in which the bit of the key mask is set to "1" is masked in determining coincidence between the sub processor key and the access key. Consequently, with this sub processor key "1010", access to a sandbox having an access key of "1010" or "1011" is enabled.

The exclusive property of the sandboxes of the main memory 12 is implemented as described above. That is, where data needs to be processed at multiple stages by a plurality of sub processors 43, only the sub processor 43 performing a process at a preceding stage and the other sub processor 43 performing a process at a succeeding stage are permitted to access a predetermined address of the main memory 12, and consequently, the data can be protected.

For example, it is considered to be used in the following manner. First, immediately after an information processing apparatus 1 is started, the values of the key masks are all "0". It is assumed that a program in the main processor 42 is executed to operate in cooperation with programs in the sub processors 43. When it is intended to store processing result data outputted from a first sub processor 43-1 once into the main memory 12 and then input the processing result data to a sub processor 43-2, the corresponding area of the main memory 12 must be accessible from both sub processors 43-1 and 43-2. In such a case, the program in the main processor 42 changes the values of the key masks suitably to provide an area of the main memory 12 that is accessible from the plurality of sub processors 43, to enable multi-stage processing by the sub-processors 43.

More specifically, the sub processor 43-1 performs a predetermined processing based on the data transmitted from the information processing apparatuses 3-1 to 3-n, and stores the processed data in a first area of the main memory 12. Then, the sub processor 43-2 reads out the stored data from the first area of the main memory 12, performs a predetermined processing based on the read out data, and stores the processed data a second area which is different from the first area of the main memory 12.

In this case, when the sub processor key of the sub processor 43-1 is "0100", the access key of the first area of the main memory 12 is "0100", the sub processor key of the sub processor 43-2 is "0101", and the access key of the second area in the main memory 12 is "0101", the sub processor 43-2 is not able to access the first area of the main memory 12. Therefore, by setting the key mask of the second sub processor 43-2 to "0001", the second sub processor 43-2 is permitted to access the first area of the main memory 12.

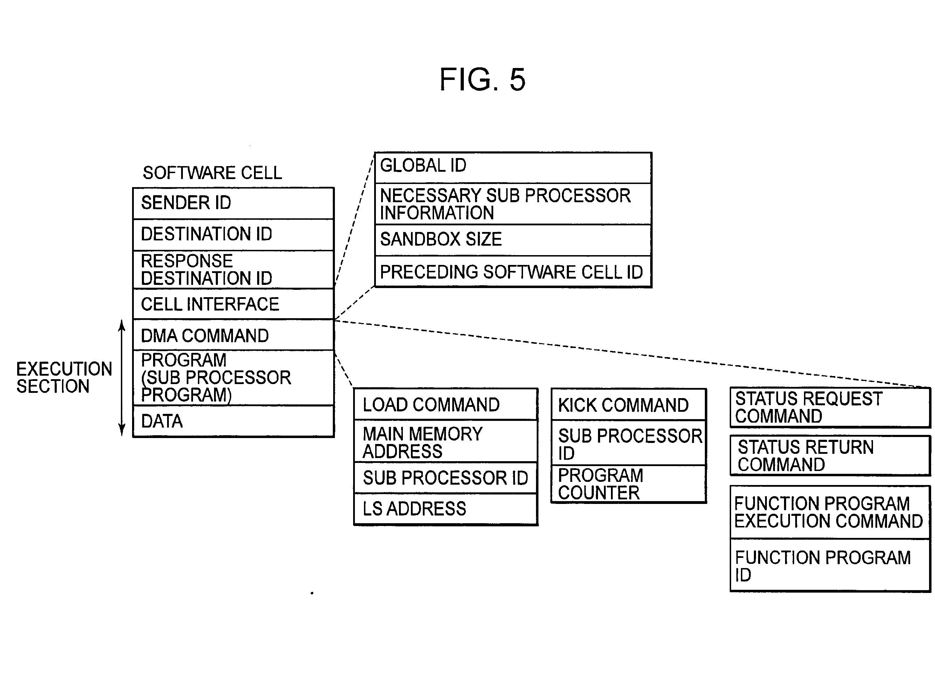

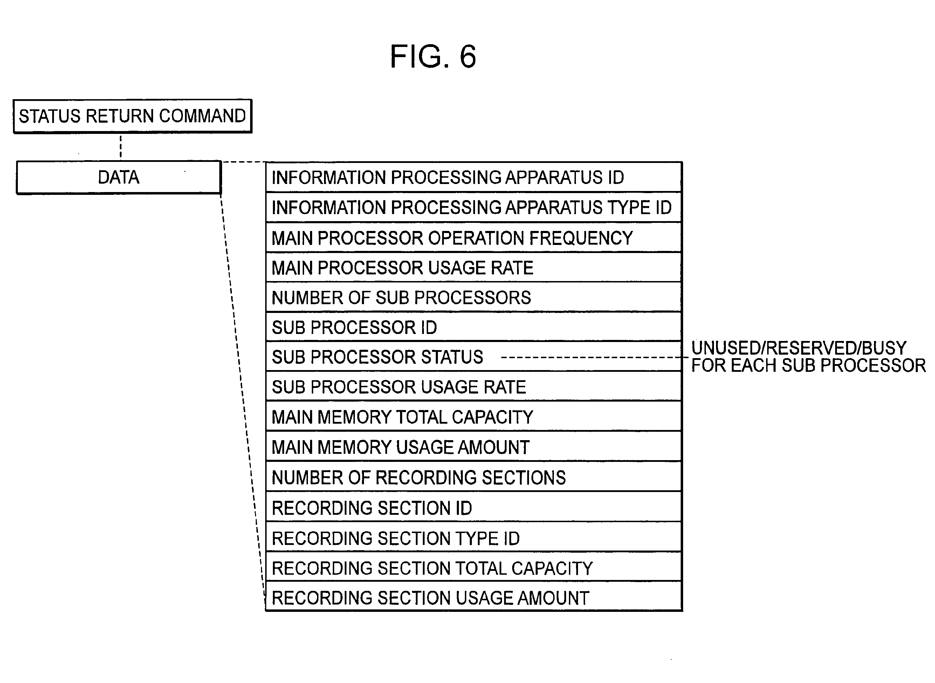

Then, with reference to FIG. 5 and FIG. 6, the processing in which the information processing apparatus 1 generates a software cell, and has the information processing apparatuses 3-1 to 3-n execute the distributed processing based on the generated software cell is described as follows.

The main processor 42 information processing apparatus 1 generates a software cell which includes commands, program, and data necessary for executing the processing, and transmits it to the information processing apparatuses 3-1 to 3-n through the network 2.

FIG. 5 is a chart for showing a configuration example of the software cell.

The software cell is configured to include a sender ID, a destination ID, a response destination ID, a cell interface, a DMA command, a program, and data as a whole.

The sender ID includes a network address of the information processing apparatus 1 which is a sender of the software cell and the device ID of the information processing controller 11 in the information processing apparatus 1, and further identifiers (main processor ID and sub processor ID) of the main processor 42 and the sub processors 43 included in the information processing controller 11 in the information processing apparatus 1.

The destination ID includes network addresses of the information processing apparatuses 3-1 to 3-n which are destinations of the software cell, device IDs of the information processing controller of the information processing apparatuses 3-1 to 3-n, and identifies of the main processor and sub processor which are equipped in the information processing controller of the information processing apparatuses 3-1 to 3-n.

In addition, the response destination ID includes a network address of the information processing apparatus 1 which is a response destination as a result of execution of the software cell, a device ID of the information processing controller 11 in the information processing apparatus 1, and identifies of the main processor 42 and sub processor 43 which are equipped in the information processing controller 11.

The cell interface is the information necessary for utilizing the software cell, and includes a global ID, necessary sub processor information, a sandbox size, and a preceding software cell ID.

The global ID allows unique identification of the software cell throughout the entire network 2, and is produced on the basis of the sender ID and the date/time (date and time) of production or transmission of the software cell.

The necessary sub processor information sets therein the number of sub processors necessary for executing the software cell. The sandbox size sets therein memory capacities in the main memory 12 and the local storage of the sub processor 43 necessary for executing the software cell.

The preceding software cell ID is an identifier of a preceding one of software cells belonging to one group that requires sequential execution of data such as streaming data.

An execution section of a software cell is formed from a DMA command, a program, and data. The DMA command includes a series of DMA commands necessary to start the program, and the program includes sub processor programs to be executed by the sub processors 43. The data here is data to be processed by the program including the sub processor programs.

Further, the DMA command includes a load command, a kick command, a function program execution command, a status request command, and a status return command.

The load command is a command for loading information in the main memory 12 into the local storage of a sub processor 43, and includes, in addition to the load command itself, a main memory address, a sub processor ID, and an LS address. The main memory address indicates an address of a predetermined area in the main memory 12, from which the information is loaded. The sub processor ID and the LS address indicate an identifier of the sub processor 43 and an address of the local storage, to which the information is loaded.

The kick command is a command for starting execution of a program, and includes, in addition to the kick command itself, a sub processor ID and a program counter. The sub processor ID identifies a sub processor 43 for kicking, and the program counter provides an address for a program counter for execution of the program.

The function program execution command is a command, as hereinafter described, by which a certain information processing apparatus (the information processing apparatus 1, for example) requests another information processing apparatus (any one of the information processing apparatuses 3-1 to 3-n, for example) to execute a function program. The information processing controller in an information processing apparatus (any one of the information processing apparatuses 3-1 to 3-n, for example) having received the function program execution command identifies a function program to be started from a function program ID hereinafter described.

The status request command is a command by which it is requested that apparatus information regarding a current operation status (situation) of the information processing apparatuses 3-1 to 3-n indicated by the destination ID be transmitted to the information processing apparatus 1 indicated by the response destination ID.

The status return command is a command by which the information processing apparatuses 3-1 to 3-n having received the above-mentioned status request command responds, with its apparatus information, to the information processing apparatus 1 indicated by the response destination ID that is included in the status request command. The status return command stores the device information into the data area of the execution section.

FIG. 6 shows a structure of the data area of a software cell where the DMA command is the status return command.

The information processing apparatus ID is an identifier for identifying information processing apparatuses 3-1 to 3-n that includes an information processing controller, and represents the ID of the information processing apparatuses 3-1 to 3-n that transmits the status return command. The devide ID is produced by the main processor 42 included in the information processing apparatus 1 when the power is supplied, on the basis of a date/time at which the power is supplied, the network address of the information processing apparatuses 3-1 to 3-n, the number of sub processors 43 included in the information processing controller 11 in the information processing apparatuses 3-1 to 3-n, and the like.

A device type ID includes a value representative of one advantage of the information processing apparatuses 3-1 to 3-n. The advantage of the information processing apparatuses 3-1 to 3-n is information designating device type of the information processing apparatuses 3-1 to 3-n, for example, such as information designating that the information processing apparatuses 3-1 to 3-n may include a hard disk recorder, a PDA (Personal Digital Assistants), a portable CD (Compact Disc) player, and the like. Further, the information processing apparatus type ID may be of a type representing a function of the information processing apparatuses 3-1 to 3-n, such as video/audio recording or video/audio reproduction. The value representative of an advantage or a function of an information processing apparatuses 3-1 to 3-n is determined in advance, and by reading out the information processing apparatus type ID, the advantage or the function of the information processing apparatuses 3-1 to 3-n can be grasped.

A main processor operation frequency represents an operation frequency of the main processor 42 in the information processing controller. A main processor usage rate represents a usage rate in the main processor 42 of all of programs currently operating in the main processor 42. The main processor usage rate is a value representing the ratio of the processing capacity being currently used to the total processing capacity of the main processor of interest, and is calculated, e.g., in a unit of MIPS, which is a unit for evaluation of the processor processing capacity, or on the basis of a processor utilization time per unit time.

The number of sub processors represents the number of sub processors 43 included in the information processing controller. A sub processor ID represents an identifier for identifying each of the sub processors 43 in the information processing controller.

A sub processor status represents a status of each sub processor 43, and includes " unused" status, "reserved" status, "busy" status. The "unused" status indicates that the sub processor is neither used at present nor reserved for use. The "reserved" status indicates that the sub processor is not used at present but reserved for use. The "busy" status indicates that the sub processor is currently used.

The sub processor usage rate represents a usage rate in the sub processor of a program being executed by the sub processor or being reserved for execution in the sub processor. That is, the sub processor usage rate indicates a current usage rate where the sub processor status is "busy", and indicates an estimated usage rate under which the sub processor is planned to be used later where the sub processor status is "reserved".

A set of the sub processor ID, sub processor status, and sub processor usage rate is set to one sub processor 43, and thus, as many sets as the number of sub processors 43 in one information processing controller are set.

A main memory total capacity and a main memory usage amount represent a total capacity and a capacity being currently used of the main memory 12 connected to the information processing controller, respectively.

The number of recording sections represents the number of recording sections connected to the information processing controller. A recording section ID is information for uniquely identifying an recording section connected to the information processing controller. A recording section type ID represents a type of the recording section (e.g., a hard disk, a CD ± RW, a DVD ± RW, a memory disk, an SRAM, a ROM, or the like).

A recording section total capacity and a recording section usage amount represent a total capacity and a current capacity of a recording section identified by the recording section ID, respectively.

A set of the recording section ID, recording section type ID, recording section total capacity, and recording section usage amount is set to one recording section, and thus, as many sets as the number of recording sections 28 connected to the information processing controller is set. That is, where a plurality of recording sections are connected to one information processing controller, different recording section IDs are allocated to the respective recording sections, and the recording section type IDs, recording section total capacities, and recording section usage amounts are also managed separately from each other.

As described above, when the information processing apparatus 1 tries to have the information processing apparatuses 3-1 to 3-n execute distributed processing, the information processing apparatus 1 generates a software cell, and transmits the generated software cell to the information processing apparatuses 3-1 to 3-n through the network 2.

In this case, various data to be transmitted to the information processing apparatuses 3-1 to 3-n from the information processing apparatus 1 are transmitted while stored in the software cell, and these description is omitted here in order to avoid duplication.

FIG. 7 is a functional block diagram for describing a control function of the logic thread in the information processing apparatus 1 which executes a predetermined application program.

In FIG. 7, each function of the application program execution control section 101, the thread resource controller 102, the abnormality notification acquiring section 103, the logic thread scheduler 104, and the logic thread execution control section 105 is executed by the processing of the main processor 42 in the information processing controller 11.

The application program execution control section 101 controls the execution of the application program loaded from the main memory 12. The application program execution control section 101 requests the generation of the logic thread by supplying setting information of the logic thread to the thread resource controller 102. The logic thread is defined as a processing unit which proposes a single function by merging a plurality of programs assigned as necessary to each of the plurality of sub processors 43, wherein these programs may correspond to the same program or different program. That is, the plurality of programs assigned as necessary to each of the plurality of sub processors 43 are the programs stored in a predetermined storage area of the main memory 12, are loaded from the main memory 12 to the local storage 51 of the corresponding sub processor 43 by the request of the application program the execution of which is controlled by the application program execution control section 101, and are executed. Further, the application program execution control section 101 receives as necessary an error notification and the like from the logic thread execution control section 105, or the thread resource controller 102.

The thread resource controller 102 performs generation and deletion of the logic thread based on the control by the application program execution control section 101, and performs status monitoring and operation control of the generated logic thread. The thread resource controller 102 includes, in order to monitor the status of the logic thread based on the information supplied from abnormality notification acquisition section 103, the whole management information table describing a whole management information of the information processing controller 11, and the logic thread management information table describing management information of each of executing logic thread in an internal memory (namely, the local storage 51-1). The thread resource controller 102 reconstructs or updates as necessary, based on the information supplied from the abnormality notification acquiring section 103, these tables, also generates a logic thread scheduler 104 based on the information of these tables, manages the execution of the logic thread, and controls the operation by controlling the logic thread execution control section 105.

Details of a whole of the management information table, and the logic thread management information table will be described with reference to FIG. 8 and FIG. 9 later.

That is, the sub processors 43-1 to 43-3 are to execute the program parallelly and independently based on the control by the main processor 42, and to able to process data, and further, as necessary, it is possible to configure such that the each program executed by the main processor 42 operates in cooperation with the programs executed by each of the sub processors 43-1 to 43-3. The thread resource controller 102 is able to have them execute the application program by managing executing status of the logic thread assigned to the sub processors 43-1 to 43-3.

The abnormality notification acquiring section 103 acquires the information designating the abnormal status of the sub processors 43-1 to 43-3 detected by the abnormality detecting sections 47-1 to 47-3 connected to the sub processors 43-1 to 43-3 from the abnormality control section 48, and supplies the information relating to the sub processor 43 where the abnormality is occurring to the thread resource controller 102.

When it becomes necessary to execute the plural threads (which are to be generated as necessary by the thread resource controller 102) to be processed in a distributed form in one thread, the logic thread scheduler 104 performs the scheduling for execution by the sub processor 43, and controls the logic thread execution control section 105.

The logic thread execution control section 105 controls the execution of the logic thread (actually, executed by the sub processors 43-1 to 43-3) based on the control by the thread resource controller 102 or the logic thread scheduler 104, and exchanges the information necessary for controlling the execution of the logic thread with the thread resource controller 102.

FIG. 8 designates the whole management information table held in the above-mentioned thread resource controller 102.

In the whole management information table, there are described the number of all sub processors, the number of busy sub processors, the number of reserved sub processors, the number of unused (stopped) sub processors, and information designating statuses of all sub processors 43. Specifically, in the whole management information table, the number of all sub processors is described as M (M is a positive integer of 1 or more than 1, and in the case of the information processing controller 11 of the information processing apparatus 1 as described in FIG. 1, M is 3), the number of busy sub processors is described as N (N is 0 or a positive integer of 1 or more than 1, but less than M), the number of reserved sub processors is described as P (P is 0 or a positive integer of 1 or more than 1, but less than M), and the number of unused or stopped sub processors is described as a value corresponding to M - (N + P) (the value is 0 or a positive integer of 1 or more than 1, but less than M). In addition to the above, there are further described status information describing which of the sub processor 43 is busy, reserved (status where the sub processor is ready for new use, namely, it is not stopped, but not busy), or stopped due to the occurence of abnormality, and error information.

FIG. 9 designates the logic thread management information table held in the above-mentioned thread resource controller 102.

In the logic thread management information table, there are stored a logic thread ID which is an ID available for descriminating its logic thread from other logic thread, an owner ID designating an application program which is an owner of the logic thread (or, an application ID which is an ID available for descriminating the application program which is owner of the logic thread from other application program, an abnormality responding operation ID designating the operation when the abnormality in any of the sub processors 43 is detected, a busy program code (or, a start address on the main memory) in which a sub processor ID designating the sub processor 43 used for executing the logic thread is described and is designating the program which the corresponding sub processor 43 is executing per each sub processor ID, context data designating operating condition of the thread, and status information designating operating status of each sub processor 43.

There are "normally operating", "abnormality occuring", "stopping due to occurence of abnormality", "time-sharing operating", "processing initialization", "processing operation change request", "normally waiting", "processing end", and "waiting normal recovery" as status information. In this case, the "normally operating" designates a state where a processing of the assigned thread among logic threads is executed in a normal state, the "abnormality occuring" designates a state where abnormality is detected by the abnormality detecting section 47, the "stopping due to occurence of abnormality" designates a state where after the abnormality is detected by the abnormality detecting section 47, the operation of the corresponding sub processor 43 is stopped by the control of the abnormality control section 48, and the "time-sharing operating" specifically designates a state where a plurality of threads are processed by one sub processor 43 in a time-sharing manner. Further, the "processing initialization" specifically designates a state of waiting a completion of program load, or processing of initial setting, the "processing operation change request" specifically designates a duration of shifting from the normal operation to the time-sharing processing operation, the "normally waiting" designates a state where it is available for use by a new thread, that is, it is not stopped but not busy, the "processing end" designates a stop preparation of the thread, and the "waiting normal recovery" designates a waiting for recovering to a normal state.

The thread resource controller 102 reconstructs or updates as necessary the whole management information table and the logic thread management information table based on the various information supplied from the application program execution control section 101, the abnormality notification acquiring section 103, or the logic thread execution control section 105, and is able to have them start, stop, or reopen the operation of arbitrary logic thread by controlling the execution of the logic thread of the logic thread execution control section 105 and the execution of the respective program (thread) corresponding to the logic thread by the sub processor 43 with reference to the whole management information table and the logic thread management information table.

Further, when received a signal designating that the abnormality is detected in any one of sub processors 43 executing the program corresponding to the logic thread from the abnormality notification acquiring section 103, the thread resource controller 102 reads in an abnormality responding operation ID which is an ID defining in advance the logic thread ID executed by the abnormality detected sub processor 43, and what kind of processing is to be executed in order to maintain the operation of the logic thread and the application operation when the abnormality is occurring with reference to the logic thread management information table. Further, the thread resource controller 102 controls the execution (execution of the program corresponding to the logic thread by the sub processor 43) of the logic thread onwards based on the abnormality responding operation ID. When abnormality is occurring, one of processings including "stop", "continue after securing resource", "continue time-sharing operation", "forcibly-continue", and "wait until normal recovery" is to be specified by the abnormality responding operation ID.

A "stop" means to stop all of the processings of the logic thread upon occurence of abnormality. Namely, if the processings of the same logic thread are executed, the "stop" means to also stop the sub processor 43 where the abnormality is not occurring. A "continue after securing resource" is to start again (or reopen) the processing of the logic thread in the case where once all processing of the logic thread are stopped, and after the processing assigned to the abnormality occurred sub processor 43 is assigned to other sub processor 43 not in use when abnormality is occurring.

The "continue time-sharing operation" is to once stop all processing of the logic thread in case of the occurrence of the abnormality, to perform a scheduling so as to assign the processing assigned to the abnormality occurred sub processor 43 to the other sub processor 43 executing the processing of the same logic thread in a time-sharing manner by the processing of the logic thread scheduler 104, and to start again (or reopen) the processing of the logic thread.

The processing of "forcibly-continue" is to continue the processing content of the other sub processor 43 which executes the processing of the same logic thread when the abnormality is occurring without stopping the processing of the logic thread once. The processing of "wait until normal recovery" is to start again (or reopen) the processing of the logic thread with the same state with which the processing of the logic thread is assigned before the occurrence of the login thread, after all processings of the logic thread are once stopped in case of occurrence of the abnormality, and the status of the abnormality occurred sub processor 43 becomes able to perform the processing when the status is recovered.

Further, in the case of occurrence of the abnormality, which processing among processings including "stop", "continue after securing resource", "continue time-sharing operation", "forcibly-continue", and "wait until normal recovery" is suitable for execution depends on a state of the processing executed by the corresponding logic thread. The processing of "stop" is a general error processing, so that it is applicable to application programs in general. Further, the processing of "continue after securing resource" is suitable for processing such as an automatic execution (including reservation execution not specifying a start time/end time), and is able to apply a case where a processing which does not require a realtime operation such as dubbing, backup, database creation, and format conversion is executed. The processing of "continue time-sharing operation for resource" is suitable for a temporary processing or the like during operation by a user, and is able to apply a case where a processing is performed such as dubbing while performing contents editing application, and timer video recording, for example, which does not require a realtime operation but wants to secure the processing end at certain level.

The processing of "forcibly-continue" normally has a low possibility to be utilized, but is suitable for an application having a high urgent need, and is suitable when applied to one which is necessary to be forcibly operated until broken such as a flight recorder, a security recording apparatus, a surveillance camera, and the like, for example. The processing of "wait until normal recovery" is suitable when applied to one which is necessary for performing a self-recovery operation to some extent among home electric products, one which it is difficult for an operator to perform maintenance, one in which necessity of maintenance is low, or a monitor control under severe condition (altitude, seabed, or extra cold region, for example).

Accordingly, it depends on the application program which of the processing is executed among the processings of "stop", "continue after securing resource", "continue time-sharing operation", "forcibly-continue", and "wait until normal recovery" when abnormality is occurring. Further, depending on the application program, it may be possible to set by a user which of the processing is executed when the abnormality is occurring. When the setting of which of the processing is executed is changed by a user when abnormality is occurring, the thread resource controller 102 updates the abnormality responding operation ID information of the logic thread management information table.

The detection of occurrence of the abnormality, and the processings of "stop", "continue after securing resource", "continue time-sharing operation", "forcibly-continue", and "wait until normal recovery" are described later in detail.

Now, with reference to an arrowchart in FIG. 10, it is described a case where a plurality of programs (the plurality of programs to be executed may be the same one, equivalent one, or different program) is loaded and executed with a plurality of sub processors 43 in an information processing apparatus 1, and the processing which the plural sub processors 43 are executing is managed as a logic thread for one of functions.

In step S1, the application program execution control section 101 notifies a logic thread generation request to the thread resource controller 102, and sets the program code, initial value information, and the number of sub processors necessary for processing or the sub processor ID utilized for processing to the thread resource controller 102. In this case, in a general processing, the number of sub processors necessary for processing is set to the thread resource controller 102, but, in a particular case where secure information is processed, a sub processor ID utilized for the processing is set.

In step S2, the thread resource controller 102 generates a logic thread in response to a logic thread generation request by the application program execution control section 101, and reconstructs the whole management information table and the logic thread management information table based on the set program code, initial value information, and the number of sub processors necessary for processing or sub processor ID utilized for the processing. That is, the thread resource controller 102 ensures the sub processor 43 to which the generated logic thread is assigned, and constructs a logic thread management information table for managing the logic thread.

In step S3, the thread resource controller 102 loads a corresponding program to one (the sub processor 43-1 in FIG. 10) of the sub processors 43 to which the processings of the generated logic thread are assigned.

Further, the thread resource controller 102 sets the initial data in step S4 by supplying a initial value to the sub processor 43-1 to which the program is loaded, and issues a program start command to the sub processor 43-1 to which the program is loaded in step S5.

The sub processor 43-1 executes initializing processing when received the program start command in step S6, and notifies initialization completion to the thread resource controller 102 in step S7.

In step S8, the thread resource controller 102 receives the initialization completion notification from the sub processor 43-1, and prepares the thread processing start to be executed in the sub processor 43-1.

In step S9, the thread resource controller 102, and one (the sub processor 43-2 in FIG. 10) of the sub processors 43 which are not initialized execute sequences similar to the above mentioned step S3 to step S7. That is, the thread resource controller 102 loads the corresponding program to the sub processor 43-2, sets initial data by supplying initial value, and issues a program start command. The sub processor 43-2 executes initializing processing when receiving the program start command, and notifies a completion of initialization to the thread resource controller 102.

In step S10, the thread resource controller 102 receives initialization completion notification from the sub processor 43-2, and prepares a processing start of the thread to be executed in the sub processor 43-2.

In this specification, a case where the number of sub processors 43 used for executing the logic thread is 2 is described, but if the number of sub processors 43 used for executing the logic thread is 3 or more, the processing equivalent to the processing in step S9 and step S10 is repeated until initialization is completed for all the sub processors 43 to which the processing of the generated logic thread is assigned.

After the initialization is completed for all sub processors 43 to which the processing of the logic thread is assigned, a processing start command is issued to all the sub processors 43 to which the processing of the logic thread is assigned. That is, the thread resource controller 102 issues a processing start command to the sub processor 43-1 in step S11. Then, in step S12, the thread resource controller 102 issues the processing start command to the sub processor 43-2.

In step S13, the thread resource controller 102 instructs the logic thread operation start to the logic thread execution control section 105. The logic thread execution control section 105 starts the operation of the logic thread.

Further, in step S14, both the logic thread execution control section 105 and the application program execution control section 101, while performing a processing for arbitrary confirming the operating content as necessary, (it depends on the application program whether the confirmation is necessary or not) controls the execution of the processing until the corresponding logic thread ends.

By the processing as above described, when a predetermined application program is executed in the information processing apparatus 1, a plurality of programs is executed by a plurality of sub processors 43 as one logic thread.

In this case, when one of the sub processors 43 belonging to the logic thread stops the operation due to some reason, the abnormality is detected by the abnormality detecting section 47 corresponding to the sub processor 43, and the abnormal sub processor number, and the abnormal status, and the like to the thread resource controller 102 from the abnormality control section 48 through the abnormality notification acquiring section 103. Then, the processing such as assigning of a new sub processor or an operation change, for example, corresponding to the abnormality responding operation ID specified to the logic thread to which the abnormality occurred sub processor 43 belongs is executed.

Then, with reference to a flowchart in FIG. 11, the processing when abnormality is occurring is described. In the processing when the abnormality is occurring designated in FIG. 11, a judgement processing in step S31 is executed at a predetermined time interval is executed after the processing in step S13 described with reference to FIG. 10 is executed, and when it is judged that a notification notifying that the abnormality is occurring is received in step S31, an interrupt processing is to be executed.

In step S31, the abnormality notification acquiring section 103 judges whether the notification notifying that the abnormality is occurring in any one of the sub processors 43 is received from the abnormality control section 48 or not. In step S31, when it is judged that the notification notifying the occurrence of the abnormality is not received, the processing proceeds to step S37 described later.

In step S31, when it is judged that the notification notifying the occurrence of the abnormality is received, the abnormality notification acquiring section 103 acquires a sub processor ID for specifying the abnormality occurred sub processor 43 based on the information supplied from the abnormality control section 48, and supplies to the thread resource controller 102 in step S32.

In step S33, the thread resource controller 102 acquires the logic thread ID which the abnormality detected sub processor 43 is executing.

In step S34, the thread resource controller 102 acquires an abnormality responding operation ID set in the corresponding logic thread with reference to the logic thread management information table.

In step S35, the thread resource controller 102 updates the content of the whole management information table and the logic thread management information table based on the content of the occurred abnormality.

In step S36, the thread resource controller 102 executes the processing based on the abnormality responding operation ID, that is, any one of above described processings including "stop", "continue after securing resource", "continue time-sharing operation", "forcibly-continue", and "wait until normal recovery". In this case, the thread resource controller 102 updates anytime the content of the whole management information table and the logic thread management information table corresponding to the executing processing.

In step S31, when it is judged if the notification notifying that the abnormality is occurring is not received, or after the end of the processing in step S36, the thread resource controller 102 judges if the application program ends based on a signal supplied from the application program execution control section 101 in step S37. In step S37, when it is judged that the application program does not end, the processing returns to step S31, and the processings onwards are repeated. In step S37, when it is judged that the application program ends, the processing is ended.

By the processing as described above, in the case where any one of the sub processors 43 belonging to the logic thread stops the operation due to something abnormality, one of processings including "stop", "continue after securing resource", "continue time-sharing operation", "forcibly-continue", and "wait until normal recovery" corresponding to the abnormality responding operation ID specified to the logic thread belonging to the abnormality occurred sub processor 43 is executed.

Then, with reference to arrowcharts in FIG. 12 to FIG. 18, the case is described wherein the processing of the logic thread is executed in a plurality of sub processors 43, and respective processing including "stop", "continue after securing resource", "continue time-sharing operation", "forcibly-continue", and "wait until normal recovery" corresponding to the abnormality responding operation ID specified to the logic thread belonging to the abnormality occurred sub processor 43. A case where abnormality is occurring in the sub processor 43-2 is described with reference to arrowcharts from FIG. 12 to FIG. 18.

A operation of the information processing apparatus 1 in the case where when abnormality is occurring in any one of sub processors 43 belonging to the logic thread, the processing of the logic thread performs the processing of "stop" with reference to the arrowchart in FIG. 12.

In step S51, the application program execution control section 101 notifies a logic thread generation request to the thread resource controller 102, and sets program code, initial value information, and the number of sub processors necessary for processing or a sub processor ID utilized for processing to the thread resource controller 102. In this case, in a general processing, the number of sub processors necessary for processing is set to the thread resource controller 102, but in a particular case where secure information is processed, a sub processor ID utilized for processing is set.

In step S52, the thread resource controller 102 generates a logic thread in response to a logic thread generation request from the application program execution control section 101, and reconstructs the management information table and the logic thread management information table based on the set program code, the initial value information, and the number of sub processors necessary for processing or the sub processor ID utilized for processing. That is, the thread resource controller 102 ensures the sub processor 43 to which the generated logic thread is assigned, and reconstructs a logic thread management information table for managing the logic thread.

In step S53, the thread resource controller 102 loads a corresponding program to one (the sub processor 43-1 in FIG. 12) of sub processors 43 to which a processing of the generated logic thread is assigned, sets initial data by supplying initial value, and issues the program start command. When receiving the program start command, the sub processor 43-1 executes the initialization processing, and notifies the initialization completion to the thread resource controller 102.

In step S54, the thread resource controller 102 executes a sequence equivalent to above described step S53 to one (the sub processor 43-2 in FIG. 12) of sub processors 43 to which the initialization are not performed. That is, the thread resource controller 102 loads a corresponding program to the sub processor 43-2, sets the initial data by supplying the initial value, and issues a program start command. The sub processor 43-2 executes the initialization processing when received the program start command, and notifies the initialization completion to the thread resource controller 102. The thread resource controller 102 issues the program start command to all of the sub processors 43 to which the logic thread is assigned, issues a processing start command to respective sub processor 43 when received the notification of the initialization completion. That is, a sequence of step S3 to step S12 described using FIG. 10 is executed in step S53 and step S54.

In this case, the description is done to the case where the processing of the logic thread is assigned to 2 sub processors 43, and in the case when the processing of the logic thread is assigned to 3 or more of the sub processors 43, the processing in step S54 is repeated until the initialization for all the sub processors 43 to which the generated logic thread is assigned is completed.

In step S55, the thread resource controller 102 instructs the logic thread operation start to the logic thread execution control section 105. Then, the logic thread execution control section 105 starts the operation of the logic thread.

In step S56, when the abnormality is occurring in the sub processor 43-2, the sub processor 43-2 notifies the abnormality information to the abnormality detecting section 47-2.

The abnormality detecting section 47-2 detects abnormality of the sub processor 43-2 in step S57, and outputs an emergency stop request of the sub processor 43-2 to the abnormality control section 48 in step S58.

The abnormality control section 48 performs an emergency stop processing of the sub processor 43-2, that is, the processing for supplying a control signal instructing an emergency stop to the sub processor 43-2 through the bus in step S59, and supplies an abnormality notification for notifying that the abnormality is occurring in the sub processor 43-2 to the abnormality notification acquiring section 103 (that is, to the main processor 42 through the bus 41) in step S60.

The abnormality notification acquiring section 103 performs the information exchange processing such as exchanging the information designating the sub processor in which the abnormality is occurring with the sub processor ID based on the content of the abnormality notification supplied from the abnormality control section 48 in step S61, and supplies the abnormality notification and the emergency stop request of the logic thread to the thread resource controller 102 in step S62.

In step S63, the thread resource controller 102 executes acquisition and updating of the information for the information table, that is, the processing from step S32 to step S35 described with reference to FIG. 11. In this case, the processing from step S64 to step S70 described below corresponds to the processing based on the abnormality responding operation ID in step S36 of FIG. 11.

The thread resource controller 102 supplies a stop request of the logic thread to the logic thread execution control section 105 in step S64.

The logic thread execution control section 105 performs a stop processing of the logic thread in step S65, and supplies a logic thread error notification to the application program execution control section 101 in step S66.

The application program execution control section 101 performs a stop processing of execution of the application program in step S67.

The logic thread execution control section 105 notifies a logic thread stop completion to the thread resource controller 102 in step S68.

In step S69, the thread resource controller 102 supplies a sub processor stop command to all sub processors 43 (the sub processor 43-1 in this example) in which the processing of the corresponding logic thread are shared, and the abnormality do not occur. Namely, the sub processor stop command is supplied to the sub processor 43-1 from the main processor 42 through the bus 41.

In step S70, the sub processor 43-1 stops the processing, and the processings relating to the corresponding logic thread are all stopped.

By the processings as above mentioned, when the abnormality is occurring in any of the sub processors 43 belonging to the logic thread, the processings of the logic thread are all "stopped".

Then, with reference to an arrowchart in FIG. 13, the operation of the information processing apparatus 1 is described in the case where the processing of the logic thread is performed by the processing of "continue after securing resource" when the abnormality is occurring in any one of the sub processors 43 belonging to the logic thread.

In step S81 to step S95, the processings in step S51 to step S65 described with reference to FIG. 12 are executed.

That is, the application program execution control section 101 notifies a logic thread generation request to the thread resource controller 102, and sets the program code, the initial value information, and the number of the sub processors necessary for processing or a sub processor ID utilized for processing to the thread resource controller 102. The thread resource controller 102 generates a logic thread, reconstructs the whole management information table and the logic thread management information table based on the set program code, initial value information, and the number of the sub processors necessary for processing or sub processor ID utilized for processing, loads the corresponding program to each of sub processors 43 to which the generated logic thread is assigned, sets initial data by supplying initial value, and issues the program start command. The sub processors 43-1 and 43-2 perform initialization processing when receiving the program start command, and notify the initialization completion to the thread resource controller 102, then the thread resource controller 102 issues a program execution command to the sub processors 43-1 and 43-2. Then, the thread resource controller 102 instructs a logic thread operation start to the logic thread execution control section 105. The logic thread execution control section 105 starts the operation of the logic thread.

When abnormality is occurring in the sub processor 43-2 during the execution of the logic thread, the sub processor 43-2 notifies the abnormality information to the abnormality detecting section 47-2. The abnormality detecting section 47-2 detects the abnormality of the sub processor 43-2, and issues an emergency stop request of the sub processor 43-2 to the abnormality control section 48. The abnormality control section 48 executes an emergency stop processing of the sub processor 43-2, that is, the processing for supplying a control signal instructing an emergency stop to the sub processor 43-2 through the bus 41, and supplies the abnormality notification notifying that the abnormality is occurring in the sub processor 43-2 to the abnormality notification acquiring section 103. The abnormality notification acquiring section 103 performs the information exchange processing such as exchanging the information designating the sub processor in which the abnormality is occurring with the sub processor ID, and the like based on the content of the abnormality notification supplied from the abnormality control section 48, and supplies the abnormality notification and the emergency stop request of the logic thread to the thread resource controller 102. The thread resource controller 102 executes acquisition and updating of the information for the information table. The thread resource controller 102 supplies the logic thread stop request to the logic thread execution control section 105. The logic thread execution control section 105 performs a stop processing for the logic thread.

In step S96, the logic thread execution control section 105 notifies the stop completion of the logic thread to the thread resource controller 102.

In step S97, the thread resource controller 102 supplies a sub processor stop command to all (the sub processor 43-1 in this case) of the sub processor 43 which share the processing of the corresponding logic thread, and in which abnormality is not occurring. That is, the sub processor stop command is supplied from the main processor 42 to the sub processor 43-1 via the bus 41.

In step S98, the sub processor 43-1 temporarily stops the executing processing.

In step S99, the thread resource controller 102 detects other sub processor 43 which is able to execute the processing instead of the sub processor 43-2 in which the abnormality is occurring based on the whole management information table, assigns the sub processor 43 as a new sub processor, and updates the description in the whole management information table and the logic thread management information table. In this case, it is assumed that the one to which the processing is assigned as the new sub processor is the sub processor 43-3.

In step S100, the thread resource controller 102 loads a corresponding program to the sub processor 43-3, sets initial data by supplying initial value, and issues a program start command. The sub processor 43-3 performs an initialization processing when receiving the program start command, and notifies an initialization completion to the thread resource controller 102, so that the thread resource controller 102 issues a program execution command to the sub processor 43-3.

In step S101, the thread resource controller 102 supplies an operation reopen request of the logic thread which is temporarily stopped to the sub processor 43-1. In this case, it depends on the application program whether the operation reopen of the logic thread is a continuation of the processing done before the temporary stop or is started from an initialization again.

In step S102, the thread resource controller 102 notifies a logic thread operation reopen to the logic thread execution control section 105, and the logic thread execution control section 105 reopens the operation of the logic thread.

By the processing as described above, even when the abnormality is occurring in any of the sub processors 43 belonging to the logic thread, the processing of the logic thread is not stopped completely, but is continued after the sub processor in which the abnormality is not occurring is secured.

Then, with arrowcharts in FIG. 14 and FIG. 15, the operation of the information processing apparatus 1 is described when the abnormality is occurring in any one of the sub processors 43 belonging to the logic thread in the time when the processing of the logic thread is performed in the processing of "continue time-sharing operation".

In step S121 to step S138, the similar processings done in step S81 to step S98 in FIG. 13 are executed.

That is, the application program execution control section 101 notifies a logic thread generation request to the thread resource controller 102, and sets a program code, initial value information, and the number of sub processors necessary for processing or the sub processor ID utilized for the processing to the thread resource controller 102. The thread resource controller 102 generates a logic thread, reconstructs the whole management information table and the logic thread management information table based on the set program code, the initial value information, and the number of sub processors necessary for processing or the sub processor ID utilized for the processing, loads the corresponding program to each sub processor 43 to which the processing of the generated logic thread is assigned, sets initial data by supplying initial value, and issues a program start command. The sub processors 43-1 and 43-2 perform initialization processing when receiving the program start command, and notify an initialization completion to the thread resource controller 102, then, the thread resource controller 102 issues a program execution command to the sub processors 43-1 and 43-2. Then, the thread resource controller 102 instructs a logic thread operation start to the logic thread execution control section 105. The logic thread execution control section 105 starts the operation of the logic thread.

When abnormality is occurring in the sub processor 43-2 during the execution of the logic thread, the sub processor 43-2 notifies the abnormality information to the abnormality detecting section 47-2. The abnormality detecting section 47-2 detects the abnormality in the sub processor 43-2, and issues an emergency stop request of the sub processor 43-2 to the abnormality control section 48. The abnormality control section 48 executes the emergency stop processing of the sub processor 43-2, namely, the processing for supplying a control signal for instructing the emergency stop to the sub processor 43-2 through the bus 41, and supplies to the abnormality notification acquiring section 103 the abnormality notification for notifying that the abnormality is occurring in the sub processor 43-2. The abnormality notification acquiring section 103 performs the information exchange processing such as exchanging the information designating the abnormality occurred sub processor with the sub processor ID, for example, based on the content of the abnormality notification supplied from the abnormality control section 48, and supplies the abnormality notification and the emergency stop request of the logic thread to the thread resource controller 102. The thread resource controller 102 supplies a logic thread stop request to the logic thread execution control section 105. The logic thread execution control section 105 performs the logic thread stop processing.

After that, the logic thread execution control section 105 notifies a logic thread stop completion to the thread resource controller 102. The thread resource controller 102 supplies a sub processor stop command to all (the sub processor 43-1 in this case) of the sub processors 43 which share the processing of the logic thread and in which the abnormality is not occurring. The sub processor 43-1 temporarily stops the processing now being executed.

In step S139, the thread resource controller 102 instructs a logic thread scheduling start in order to have the sub processor 43 in which abnormality is not occurring (the sub processor 43-1 only in this case) execute the processing of the temporarily stopped logic thread in a time-sharing manner by supplying the information relating to the temporarily stopped logic thread to the logic thread scheduler 104.

The logic thread scheduler 104 performs a initialization for starting the scheduling of the logic thread in step S140, and notifies a operation preparation completion to the thread resource controller 102 in step S 141.

In step S142, the sub processor 43-1 in which abnormality is not occurring executes the processing of the sub processor 43-2 in which the abnormality is occurring based on the scheduling of the logic thread scheduler 104 in a time-sharing manner, so that the thread resource controller 102 updates the description of the whole management information table and the logic thread management information table.

In step S143, the thread resource controller 102 loads all programs corresponding to the logic thread to the logic thread scheduler 104, and sets initial data by supplying the initial value.

In step S144, the thread resource controller 102 instructs an operation start of the logic thread to the logic thread execution control section 105. Then, the logic thread execution control section 105 starts the operation of the logic thread.

In step S145, the logic thread scheduler 104 has the sub processor 43-1 load the first program corresponding to the processing assigned in time-sharing manner, sets initial data by supplying initial value, and issues a program start command. The sub processor 43-1 executes the program when receiving the program start command.

In step S146, the logic thread scheduler 104 saves the context designating the information (that is, operating condition of the thread) relating to the processing of the first program executed by the sub processor 43-1 in step S145 to a predetermined storage area of the main memory 12, and switches (read out the context of the second program from a predetermined storage area of the main memory 12) the context in order to have the sub processor 43-1 execute the second program corresponding to a subsequent processing assigned in a time-sharing manner.

In step S 147, the logic thread scheduler 104 has the sub processor 43-1 load the second program corresponding to the processing assigned in time-sharing manner, sets initial data by supplying initial value, and issues a program start command. The sub processor 43-1 executes the program when receiving the program start command.

In step S148, the logic thread scheduler 104 saves the context relating to the processing of the second program executed by the sub processor 43-1 in step S 147 to a predetermined storage area of the main memory 12, and switches (read out the context of the first program from a predetermined storage area of the main memory 12) the context in order to have the sub processor 43-1 execute the first program corresponding to a subsequent processing assigned in a time-sharing manner.

Further, in step S149 and step S150, the processing similar to step S145 and step S146 are performed, the first program is loaded and executed, and in order to execute the second program corresponding to a subsequent processing assigned in a time-sharing manner, the context is switched after the context of the first program is saved.

Further, in step S151 and step S 152, the second program is loaded and executed by performing the processing similar to step S 147 and step S148, and in order to execute the first program corresponding to a consequent processing assigned in a time-sharing manner at a predetermined timing, the context is switched after the context of the second program is saved.

Further, after step S253, the first program and the second program are also alternately executed in the sub processors 43-1 in which abnormality is not occurring based on the scheduling by the logic thread scheduler 104 until the logic thread ends in the same manner.

By the processing as above described, in the case when the abnormality is occurring in one of sub processors 43 belonging to the logic thread, the operation of "continue time-sharing operation" is performed in the sub processor 43 in which the abnormality is not occurring without stopping the processing of the logic thread.

In this specification, the description is done to the case where the logic thread is performing the processing with 2 sub processors 43, and where the abnormality is occurring in one of sub processors 43, in other words, the abnormality is occurring in only one sub processor 43. However, in the logic thread where the processing is performed by 3 or more than 3 of sub processors 43, it is of course possible for the logic thread scheduler 104 to set a scheduling so as to have 2 or more of the sub processors 43 in which abnormality is not occurring execute the processing of the logic thread in a time-sharing manner.

Next, with reference to an arrowchart in FIG. 16, the operation of the information processing apparatus 1 is described when the processing of the logic thread is performed by the processing of "forcibly-continue" in the case where the abnormality is occurring in any of the sub processors 43 belonging to the logic thread.

In step S171 to step S183, the similar processings done in step S51 to step S63 in FIG. 12 are executed.

That is, the application program execution control section 101 notifies a logic thread generation request to the thread resource controller 102, and sets program code, initial value information, and the number of sub processors necessary for processing or sub processor ID utilized for the processing to the thread resource controller 102. The thread resource controller 102 generates a logic thread, reconstructs the whole management information table and the logic thread management information table based on the set program code, the initial value information, and the number of sub processors necessary for the processing or sub processor ID utilized for the processing, loads corresponding program to each sub processor 43 to which the processing of the generated logic thread is assigned, sets initial data by supplying initial value, and issues a program start command. The sub processors 43-1 and 43-2 receive the program start command, perform initialization processing, and notify the initialization completion to the thread resource controller 102, so that the thread resource controller 102 issue the program execution command to the sub processors 43-1 and 43-2. Then, the thread resource controller 102 instructs a logic thread operation start to the logic thread execution control section 105. The logic thread execution control section 105 starts the operation of the logic thread.

When abnormality is occurring in the sub processor 43-2 during operating of the logic thread, the sub processor 43-2 notifies abnormality information to the abnormality detecting section 47-2. The abnormality detecting section 47-2 detects the abnormality of the sub processor 43-2, and issues an emergency stop request of the sub processor 43-2 to the abnormality control section 48. The abnormality control section 48 executes an emergency stop processing of the sub processor 43-2, that is, the processing for supplying a control signal instructing an emergency stop of the sub processor 43-2 to the sub processor 43-2 through the bus 41, and supplies the abnormality notification notifying that the abnormality is occurring in the sub processor 43-2 to the abnormality notification acquiring section 103. The abnormality notification acquiring section 103 performs information exchange processing such as exchanging the information designating the sub processor in which abnormality is occurring to a sub processor ID, for example, based on the content of the abnormality notification supplied from the abnormality control section 48, and supplies the abnormality notification and an emergency stop request for the logic thread to the thread resource controller 102. The thread resource controller 102 executes the processing of acquiring and updating of information of the information table.

In step S184, the thread resource controller 102 notifies to the application program execution control section 101 that error is occuring in the processing of the logic thread. That is, the thread resource controller 102 does not request a logic thread stop to the execution control section 105, so that the logic thread execution control section 105 does not perform a logic thread stop processing.

That is, when the operation of the sub processor 43-2 in which the abnormality is occurring is stopped, but, the logic thread is not stopped, so that the processing of the sub processor 43-1 in which the abnormality is not occurring is continued until the assigned logic thread ends.

By the processing as mentioned above, even in the case where abnormality is occurring in any one of the sub processors 43 belonging to the logic thread, it is performed, without stopping the processing of the logic thread, a processing of "forcibly-continue" to the processing assigned to the sub processor 43 in which the abnormality is not occurring.

Then, with reference to arrowcharts in FIG. 17 and FIG. 18, the operation of the information processing apparatus 1 performing a processing of "wait until normal recovery" to the processing of the logic thread is described when abnormality is occurring in any one of the sub processors 43 belonging to the logic thread.

In step S201 to step S214, the similar processings done in step S171 to step S 184 in FIG. 16 are executed.

Namely, the application program execution control section 101 notifies logic thread generation request to the thread resource controller 102, and sets the program code, initial value information, the number of necessary busy sub processors, or the sub processor ID used in the processing to the thread resource controller 102. The thread resource controller 102 generates the logic thread, reconstructs the whole management information table and the logic thread management information table based on the set program code, initial value information, and the number of sub processors necessary for processing or sub processor ID utilized for processing, loads a corresponding program to each of sub processors 43 to which the processing for the generated logic thread is assigned, sets an initial data by supplying an initial value, and issues the program start command. The sub processors 43-1 and 43-2 execute initialization processing when receiving the program start command, and notify the initialization completion to the thread resource controller 102, so that the thread resource controller 102 issues a program execution command to the sub processors 43-1 and 43-2. Then, the thread resource controller 102 instructs a logic thread operation start to the logic thread execution control section 105. The logic thread execution control section 105 starts the operation of the logic thread.

When abnormality is occurring in the sub processor 43-2 during execution of the logic thread, the sub processor 43-2 notifies abnormality information to the abnormality detecting section 47-2. The abnormality detecting section 47-2 detects the abnormality of the sub processor 43-2, and issues an emergency stop request of the sub processor 43-2 to the abnormality control section 48. The abnormality control section 48 performs an emergency stop processing of the sub processor 43-2, that is, a processing for supplying a control signal instructing an emergency stop to the sub processor 43-2 via the bus 41, and supplies the abnormality notification for notifying that abnormality is occuring in the sub processor 43-2 to the abnormality notification acquiring section 103. The abnormality notification acquiring section 103 performs information exchange processing such as exchange of the information designating the sub processor where abnormality is occurring with the sub processor ID, for example, based on the content of the abnormality notification supplied from the abnormality control section 48, and supplies the abnormality notification and the emergency stop request of the logic thread to the resource controller 102. The thread resource controller 102 executes the processing of acquiring and updating information for the information table, and notifies to the application program execution control section 101 that error is occuring in processing of the logic thread.

The thread resource controller 102 supplies a stop request of the logic thread to the logic thread execution control section 105 in step S215.

The logic thread execution control section 105 performs a stop processing of the logic thread in step S216, and notifies a logic thread stop completion to the thread resource controller 102 in step S217.

In step S218, the thread resource controller 102 supplies a sub processor stop command to all (in this example, the sub processor 43-1) of the sub processors 43 in which abnormality is not occuring therein among sub processors 43 sharing corresponding processing of the logic thread. Namely, the sub processor stop command is supplied to the sub processor 43-1 from the main processor 42 through a bus 41.

In step S219, the sub processor 43-1 stops the processing.

In step S220, the sub processor 43-2 now in operable condition by recovering the abnormal condition notifies to an abnormality detecting section 47-2 that the abnormality is recovered, and the reopen of the processing of the logic thread is possible.

The abnormality detecting section 47-2 detects a recovery from abnormality of the sub processor 43-2 in step S221, and notifies the recovery of the sub processor 43-2 to the abnormality control section 48 in step S222.

In step S223, the abnormality control section 48, for example, transmits a predetermined signal to the sub processor 43-2, and confirms the operation of the sub processor 43-2. In step S224, the sub processor 43-2 supplies, for example, to the abnormality control section 48 a response corresponding to the supplied signal, and notifies that the operating condition is normal to the abnormality control section 48.

The abnormality control section 48 notifies a recovery of the sub processor 43-2 to the abnormality notification acquiring section 103 in step S225.

The abnormality notification acquiring section 103 performs information exchange processing such as converting the information designating the sub prosessor in which the abnormality is recovered into the sub processor ID, for example, based on the content of the abnormality recovery notification in step S226, and in step S227 notifies the recovery of abnormality of the sub processor 43-2 and supplies a reopen request for the operation of the logic thread to the thread resource controller 102.

In step S226, the thread resource controller 102 acquires and updates information of the whole management information table and the logic thread management information table for managing the logic threads which reopen the operation.

In step S229, the thread resource controller 102 loads the corresponding program to one (the sub processor 43-2 in FIG. 18) of sub processors 43 to which the processing of the generated logic thread is assigned, sets initial data by supplying initial value, and issues a program start command. The sub processor 43-2 executes initializing processing when receiving a program start command, and notifies the completion of initialization to the thread resource controller 102, so that the thread resource controller 102 issues a program execution command to the sub processor 43-2.

In step S230, the thread resource controller 102 executes a sequence equivalent to the above described step S229 to one (the sub processor 43-1 in FIG. 18) of not initialized sub processors 43. Namely, the thread resource controller 102 loads the corresponding program to the sub processor 43-1, sets initial data by supplying initial value, and issues a program start command. The sub processor 43-1 executes initializing processing when receiving the program start command, and notifies the completion of initialization to the thread resource controller 102, so that the thread resource controller 102 issues a program execution command to the sub processor 43-1.

The processings in step S229 and step S230 are repeated until the initialization is completed for all of the sub processors 43 to which the processing of the generated logic thread is allocated.

In Step S231, the thread resource controller 102 notifies the reopen of the logic thread to the application program execution control section 101. In step S232, the application program execution control section 101 performs a preparation for reopen of the processing by the application program, and reopens the processing. Then, in step S233, the thread resource controller 102 instructs the operation start of the logic thread to the logic thread execution control section 105. The logic thread execution control section 105 starts the operation of the logic thread. In this case, it depends on the application program whether the operation reopen is a continuation of the processing before the temporary stop, or a start again from initialization.

Then, based on the control by the thread resource controller 102, the processing of the logic thread is reopened in the same condition as before the occurence of the abnormality, and the processing is continued until the logic thread ends in the sub processor 43-1 and the sub processor 43-2.

According to the above-mentioned processing, even abnormality is occurring in any of the sub processors 43 belonging to the logic thread, the operation of the logic thread is not stopped, and is waited until the recovery of the sub processor in which the abnormality is occurring. After the sub processor in which the abnormality is occurring is recovered, the processing for the logic thread is continued.

As described above, by applying the embodiment of the present technique, the processings of the logic thread are executed by a plurality of sub processors 43, and respective processing of "stop", "continue after securing resource", "continue time-sharing operation", "forcibly-continue", and "wait until normal recovery" is executed corresponding to the abnormality responding operation ID specified to the logic thread to which the abnormality occurring sub processor 43 belongs, so that even if one of sub processors stops its operation due to some reason, it is possible to maintain the function operating to be a normal state by stopping the function of the logic thread as necessary, or by not necessarily stopping the operation, and is possible to reopen the logic thread as necessary without performing a complex processing

The above-mentioned successive processing may be executed by software. Such software may be installed in a computer in which programs configuring the software are assembled in a dedicated hardware, or may be installed from a recording media to a general purpose personal computer, for example, which is able to execute various functions by installing various programs.

This recording media is configured with a package media such as magnetic disk 61 (including a flexible disk), an optical disk 62 (including CD-ROM (Compact Disk-Read Only Memory), DVD (Digital Versatile Disk), a magneto-optical disk 63 (including MD (Mini-Disk) (Trade Mark)), or semiconductor memory 64 in which a program to be distributed to supply the program to user other than to a computer as shown in FIG. 1.

Further, in the present specification, the steps describing the program to be recorded in the recording media may include the processings performed time sequentially along with the described order, but, even they are not always processed time sequentially, may also include the processings performed parallely or individually.

Further, the system in this specification represents an apparatus as a whole being configured with a plurality of apparatuses.
The present technique is related to Japanese Patent Application JP 2004-164089 filed in the Japanese Patent Office on June 2, 2004, the entire contents of which being incorporated herein by reference.
In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.
Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information processing apparatus comprising:
first information processing means;
a plurality of second information processing means; and
abnormality detecting means for detecting abnormality of the second information processing means, wherein
the first information processing means includes;
application program execution control means for controlling the execution of the application program;
distributed processing control means for controlling a distributed processing for proposing one function by combining a plurality of processings assigned to a plurality of the second information processing means by the application program in which the execution is controlled by the processing of the application program execution control means; and
abnormality information acquiring means for acquiring first information relating to the abnormality of the second information processing means detected by the abnormality detecting means, and
the distributed processing control means stores the second information designating the case where the abnormality of the second information processing means is detected by the abnormality detecting means set depending on the processing unit, and controls the distributed processing corresponding to the processing unit based on the second information when the first information is acquired by the abnormality information acquiring means.

2. The information processing apparatus as cited in claim 1, wherein
the operations in the case where the abnormality is detected such as designated in the second information may be able to include an operation for stopping all of the distributed processings corresponding to the processing unit.

3. The information processing apparatus as cited in claim 1, wherein
the operations in the case where the abnormality such as designated in the second information is detected may be able to include an operation, after all distributed processings corresponding to the processing unit are once stopped, for reopening the distributed processing corresponding to the processing unit so as to have the second information processing means, which does not execute the distributed processing corresponding to the processing unit, execute the distributed processing executed by the second information processing means in which the abnormality is detected by the abnormality detecting means.

4. The information processing apparatus as cited in claim 1, wherein
the operations in the case where the abnormality such as designated in the second information is detected may be able to include an operation for stopping the distributed processing corresponding to the processing unit executed by the second information processing means in which the abnormality is detected by the abnormality detecting means, and for continuing the distributed processing executed by the second information processing means in which the distributed processing is executed and the abnormality is not occurring.

5. The information processing apparatus as cited in claim 1, wherein
the operations in the case where the abnormality such as designated in the second information is detected may be able to include an operation, once all distributed processings corresponding to the processing unit are stopped and after the second information processing means in which the abnormality is detected by the abnormality detecting means becomes an operable state, for reopening the distributed processing corresponding to the processing unit so as to have the plurality of second information processing means which execute the distributed processing before the stop of the processing execute the distributed processing corresponding to the processing unit.

6. The information processing apparatus as cited in claim 1, wherein
the operations in the case where the abnormality such as designated in the second information is detected may be able to include an operation, after all distributed processings corresponding to the processing unit are once stopped, for reopening the distributed processing corresponding the processing unit so as to have the second information processing means in which the distributed processing is executed and the abnormality is not occurring execute a first distributed processing executed before the stop of the processing and a second distributed processing executed by the second information processing means in which the abnormality is detected by the abnormality detecting means in a time-sharing manner.

7. The information processing apparatus as cited in claim 6, wherein
the first information processing means may have any one of second information processing apparatuses further include time division processing control means for controlling the time-sharing processing in the case where the first distributed processing and the second distributed processing are executed in a time-sharing manner.

8. An information processing method an information processing apparatus which includes first information processing means, and a plurality of second information processing means, comprising:
a distributed processing start request step for requesting start of the distributed processing for proposing a function corresponding to a processing unit which proposes one function by combining a plurality of processings assigned to a plurality of the second information processing means by the execution of the application program by the first information processing means;
an abnormality detection step for detecting abnormality of the second information processing means executing the distributed processing;
an abnormality information acquiring step for acquiring first information relating to the abnormality of the second information processing means detected by the processing of the abnormality detection step;
an abnormal operation information acquiring step for acquiring second information set depending on the processing unit and designating the operation in the case where abnormality is detected when the first information is acquired by the processing of the abnormality information acquiring step; and
a distributed processing control step for controlling the distributed processing corresponding to the processing unit based on the second information acquired by the processing of the abnormal operation information acquiring step.

9. A program executable by a computer for controlling a distributed processing in a first information processing means and a plurality of second information processing means comprising:
a distributed processing start request step for requesting start of the distributed processing for proposing a function corresponding to a processing unit which proposes one function by combining a plurality of processings assigned to a plurality of the second information processing means by the execution of the application program by the first information processing means;
an abnormality information acquiring step for acquiring first information relating to the abnormality of any one of the second information processing means executing the distributed processing;
an abnormal operation information acquiring step for acquiring second information set depending on the processing unit and designating the operation in the case where abnormality is detected when the first information is acquired by the processing of the abnormality information acquiring step; and
a distributed processing control step for controlling the distributed processing corresponding to the processing unit based on the second information acquired by the processing of the abnormal operation information acquiring step.
